# EUROPEAN PATENT APPLICATION

(11) **EP 4 373 148 A1**
(43) Date of publication of application: **22.05.2024**
(21) Application number: 22841768.9
(22) Date of filing: 27.04.2022
(51) Int. Cl.: H04W 16/32, H04W 36/28, H04W 36/36, H04W 72/04

(54) **WIRELESS ACCESS NETWORK NODE AND METHOD THEREFOR**

(30) Priority: 14.07.2021 JP 2021116604
(71) Applicant: NEC Corporation, 108-8001 Tokyo (JP)
(72) Inventor: FUTAKI Hisashi, Tokyo 108-8001 (JP); HAYASHI Sadafuku, Tokyo 108-8001 (JP)
(74) Representative: MacDougall, Alan John Shaw
(86) International application number: PCT/JP2022/019163
(87) International publication number: WO 2023/286421

(57) **Abstract**

While an MN-initiated inter-SN Conditional Primary Secondary Cell Group (SCG) Cell (PSCell) Change (CPC) from a source Secondary Node (S-SN) (2) to a target SN (T-SN) (4) is in progress with respect to a PSCell of an SCG of the User Equipment (UE) (3), a Master Node (MN) (1) does not configure, prepare, or allow an SN-initiated inter-SN CPC to at least the same T-SN (4) with respect to the same UE (3). For example, this can contribute to avoiding complex processing for Inter-SN CPC.

## Description

### Technical Field

The present disclosure relates to radio communication systems, and in particular to mobility of a radio terminal in multi-connectivity (e.g., Dual Connectivity).

### Background Art

The 3rd Generation Partnership Project (3GPP (registered trademark)) is working on Release 17. The 3GPP is discussing the application of conditional mobility to a cell change (i.e., inter-SN PSCell change) between Secondary Nodes (SNs) of a Primary Secondary Cell Group (SCG) Cell (PSCell) in an SCG of Dual Connectivity (DC) (see, for example, Non-Patent 1-7). This is called an inter-SN conditional PSCell Change (CPC). An PSCell is the Special Cell (SpCell) of an SCG in DC. The UE performs random access to the PSCell when it performs a handover procedure (or Reconfiguration with Sync procedure). An SCG is a group of serving cells associated with an SN, consisting of the SpCell (i.e., PSCell) and optionally one or more Secondary Cells (SCells).

CPC is a PSCell change procedure that is executed only when one or more execution conditions are met or satisfied. The radio terminal (i.e., User Equipment (UE)) maintains the connection to the Source SN (S-SN) and the SCG after receiving a PSCell change instruction from the Master Node (MN) and starts to evaluate an execution condition(s) configured by the instruction. The UE then initiates access to the Target SN (T-SN) in response to the satisfaction of the execution condition(s). In other words, CPC differs from normal PSCell change in that the UE initiates access to the target PSCell (or new PSCell) not in response to a PSCell change instruction, but in response to the satisfaction of the execution condition(s) configured by the instruction.

Inter-SN CPC can be initiated by the MN or by the Source SN. Inter-SN CPC initiated by the MN is called MN initiated inter-SN CPC. On the other hand, inter-SN CPC initiated by the S-SN is called SN initiated inter-SN CPC. In MN initiated inter-SN CPC, the MN generates a CPC execution condition(s) and the T-SN generates the SCG configuration. In contrast, for SN initiated inter-SN CPC, the S-SN generates a CPC execution condition(s) and sends it to the MN. For both MN-initiated CPC and SN-initiated CPC, the T-SN generates the SCG configuration and sends it to the MN. The MN then sends the CPC configuration (e.g., ConditionalReconfiguration Information Element (IE)), containing the CPC execution conditions and the SCG configuration, to the UE via a Radio Resource Control (RRC) (Connection) Reconfiguration message.

### Citation List

### Non Patent Literature

[Non-Patent Literature 1] Vice Chairman (Nokia), "Report on LTE legacy, Mobility, DCCA, Multi-SIM and RAN slicing", R2-2106471, 3GPP TSG-RAN WG2 Meeting #114-e, May 19-27, 2021
[Non-Patent Literature 2] CATT, "TS 37.340 CR for CPA and inter-SN CPC", R2-2105062, 3GPP TSG-RAN WG2 Meeting #114-e, May 19-27, 2021
[Non-Patent Literature 3] Huawei, "(TP to CPAC TS 37.340 BL CR) Consideration on conditional PSCell change/addition", R3-212833, 3GPP TSG-RAN WG3 Meeting #112-e, May 17-28, 2021
[Non-Patent Literature 4] Samsung, "(TP to TS 38.423, LTE_NR_DC_enh2-Core) Adding CPAC Procedure", R3-212968, 3GPP TSG-RAN WG3 Meeting #112-e, May 17-27, 2021
[Non-Patent Literature 5] Samsung, "(TP to TS 36.423, LTE_NR_DC_enh2-Core) Adding CPAC Procedure", R3-212969, 3GPP TSG-RAN WG3 Meeting #112-e, May 17-27, 2021
[Non-Patent Literature 6] Huawei, "Support of Conditional PSCell Change and Addition", R3-212995, 3GPP TSG-RAN WG3 Meeting #112-e, May 17-27, 2021
[Non-Patent Literature 7] Nokia, Nokia Shanghai Bell, "CPAC BL CR to TS 36.423", R3-212994, 3GPP TSG-RAN WG3 Meeting #112-e, May 17-28, 2021

### Summary of Invention

### Technical Problem

The inventors have studied inter-SN CPC and found various problems. One of these problems concerns the complexity of processing inter-SN CPC. Specifically, if both MN-initiated inter-SN CPC and SN-initiated inter-SN CPC are configured simultaneously, the process of the network (i.e., Radio Access Network (RAN)) or the UE or both may become complicated.

Another problem identified by the inventors relates to the details of the MN-initiated inter-SN CPC procedure. In an MN-initiated CPC, the S-SN receives an SN Release Request message from the MN. However, if the S-SN cannot recognize that this SN Release Request message is for an MN-initiated inter-SN CPC, the S-SN would potentially stop providing user data to the UE in response to receiving the SN Release Request message.

Still another problem identified by the inventors relates to the behavior of the T-SN when it rejects a request for an inter-SN CPC. The T-SN may reject an inter-SN CPC request because it cannot accept any inter-SN CPC. This may be because the T-SN does not support inter-SN CPC in the first place, or because the T-SN is temporarily under heavy load. Alternatively, the T-SN may reject an inter-SN CPC request because inter-SN CPC is not acceptable only for one or more candidate cells (candidate PSCells) specified by the inter-SN CPC request. It may be preferable for the MN in the case of MN-initiated inter-SN CPC or the S-SN in the case of SN-initiated inter-SN CPC to be able to distinguish between these reasons for rejection. If the MN or S-SN does not send new inter-SN CPC requests to the T-SN, even though the T-SN is simply unable to accept an inter-SN CPC to only one or more specified candidate cells (candidate PSCells), this may result in an excessive restriction of inter-SN CPC opportunities.

One of the objects to be accomplished by example embodiments disclosed herein is to provide apparatuses, methods, and programs that contribute to solving at least one of a plurality of problems, including the problems described above. It should be noted that this object is merely one of the objects to be achieved by the example embodiments disclosed herein. Other objects or problems and novel features will be made apparent from the following description and the accompanying drawings.

### Solution to Problem

A first aspect is directed to a RAN node configured to operate as an MN associated with a Master Cell Group (MCG) in dual connectivity for a UE. The RAN node includes at least one memory and at least one processor coupled to the at least one memory. The at least one processor is configured to, while an MN-initiated inter-SN CPC from an S-SN to a T-SN is in progress with respect to a PSCell of an SCG of the UE, not configure, prepare, or allow an SN-initiated inter-SN CPC to at least the T-SN with respect to the UE.

A second aspect is directed to a method performed by a RAN node configured to operate as an MN associated with an MCG in dual connectivity for a UE. The method includes, while an MN-initiated inter-SN CPC from an S-SN to a T-SN is in progress with respect to a PSCell of an SCG of the UE, not configuring, preparing, or allowing an SN-initiated inter-SN CPC to at least the T-SN with respect to the UE.

A third aspect is directed to a RAN node configured to operate as an S-SN associated with an SCG in dual connectivity for a UE. The RAN node includes at least one memory and at least one processor coupled to the at least one memory. The at least one processor is configured to, while an MN-initiated inter-SN CPC from the S-SN to a T-SN is in progress with respect to a PSCell of the SCG of the UE, not initiate an SN-initiated inter-SN CPC to at least the T-SN with respect to the UE.

A fourth aspect is directed to a method performed by a RAN node configured to operate as an S-SN associated with an SCG in dual connectivity for a UE. The method includes, while an MN-initiated inter-SN CPC from the S-SN to a T-SN is in progress with respect to a PSCell of the SCG of the UE, not initiating an SN-initiated inter-SN CPC to at least the T-SN with respect to the UE.

A fifth aspect is directed to a RAN node configured to operate as an MN associated with an MCG in dual connectivity for a UE. The RAN node includes at least one memory and at least one processor coupled to the at least one memory. The at least one processor is configured to, during a procedure for preparing an MN-initiated inter-SN CPC from an S-SN to a T-SN with respect to a PSCell of an SCG of the UE, send an SN Release Request message to the S-SN containing information indicating that this message is for an inter-SN CPC.

A sixth aspect is directed to a method performed by a RAN node configured to operate as an MN associated with an MCG in dual connectivity for a UE. The method includes, during a procedure for preparing an MN-initiated inter-SN CPC from an S-SN to a T-SN with respect to a PSCell of an SCG of the UE, sending an SN Release Request message to the S-SN containing information indicating that this message is for an inter-SN CPC.

A seventh aspect is directed to a RAN node configured to operate as an S-SN associated with an SCG in dual connectivity for a UE. The RAN node includes at least one memory and at least one processor coupled to the at least one memory. The at least one processor is configured to, during a procedure for preparing an MN-initiated inter-SN CPC from the S-SN to a T-SN with respect to a PSCell of the SCG of the UE, receive an SN Release Request message from an MN containing information indicating that this message is for an inter-SN CPC.

An eighth aspect is directed to a method performed by a RAN node configured to operate as an MN associated with an MCG in dual connectivity for a UE. The method includes, during a procedure for preparing an MN-initiated inter-SN CPC from the S-SN to a T-SN with respect to a PSCell of the SCG of the UE, receive an SN Release Request message from an MN containing information indicating that this message is for an inter-SN CPC.

A ninth aspect is directed to a RAN node configured to operate as a T-SN associated with an SCG in dual connectivity for a UE. The RAN node includes at least one memory and at least one processor coupled to the at least one memory. The at least one processor is configured to send a rejection message to an MN when rejecting a request for an inter-SN CPC from an S-SN to the T-SN. The rejection message indicates whether any inter-SN CPCs are unacceptable by the target SN or only the inter-SN CPC for one or more candidate cells specified in the request is unacceptable.

A tenth aspect is directed to a method performed by a RAN node configured to operate as a T-SN associated with an SCG in dual connectivity for a UE. The method includes sending a rejection message to an MN when rejecting a request for an inter-SN CPC from an S-SN to the T-SN. The rejection message indicates whether any inter-SN CPCs are unacceptable by the target SN or only the inter-SN CPC for one or more candidate cells specified in the request is unacceptable.

An eleventh aspect is directed to a program. The program includes a set of instructions (software codes) that, when loaded into a computer, cause the computer to perform the method according to the second, fourth, sixth, eighth, or tenth aspect described above.

### Advantageous Effects of Invention

According to the aspects described above, it is possible to provide apparatuses, methods and programs that contribute to solving at least one of a plurality of problems related to inter-SN CPC, including the problems described above.

### Brief Description of Drawings

Fig. 1 shows an example configuration of a radio communication network according to an example embodiment;
Fig. 2 shows an example configuration of a RAN node according to an example embodiment;
Fig. 3 is a flowchart showing an example of a process performed by an MN according to an example embodiment;
Fig. 4 is a flowchart showing an example of a process performed by an MN according to an example embodiment;
Fig. 5 is a flowchart showing an example of a process performed by an S-SN according to an example embodiment;
Fig. 6 is a sequence diagram showing an example of a process performed by an MN and S-SN according to an example embodiment;
Fig. 7 is a flowchart showing an example of a process performed by an MN according to an example embodiment;
Fig. 8 is a flowchart showing an example of a process performed by an S-SN according to an example embodiment;
Fig. 9 is a sequence diagram showing an example of a process performed by an MN and S-SN according to an example embodiment;
Fig. 10 is a sequence diagram showing an example of a process performed by an MN and S-SN according to an example embodiment;
Fig. 11 is a sequence diagram showing an example of a process performed by an MN and S-SN according to an example embodiment;
Fig. 12 is a flowchart showing an example of a process performed by a T-SN according to an example embodiment;
Fig. 13 is a sequence diagram showing an example of a process performed by an MN, S-SN, and T-SN according to an example embodiment;
Fig. 14 is a block diagram showing an example configuration of a RAN node according to an example embodiment; and
Fig. 15 is a block diagram showing an example configuration of a UE according to an example embodiment.

### Example Embodiment

Specific example embodiments will be described hereinafter in detail with reference to the drawings. The same or corresponding elements are denoted by the same symbols throughout the drawings, and duplicated explanations are omitted as necessary for the sake of clarity.

Each of the example embodiments described below may be used individually, or two or more of the example embodiments may be appropriately combined with one another. These example embodiments include novel features different from each other. Accordingly, these example embodiments contribute to attaining objects or solving problems different from one another and contribute to obtaining advantages different from one another.

The example embodiments presented below are primarily described for the 3GPP Long Term Evolution (LTE) system and the 5th generation mobile communication system (5G system). However, these example embodiments can be applied to other radio communication systems that support technologies similar to 3GPP multi-connectivity (e.g., Dual Connectivity). The term LTE as used in this specification includes enhancements and developments of LTE and LTE-Advanced to enable interworking with the 5G system, unless otherwise noted.

As used in this specification, "if" can be interpreted to mean "when", "at or around the time", "after", "upon", "in response to determining", "in accordance with a determination", or "in response to detecting", depending on the context.

### First Example Embodiment

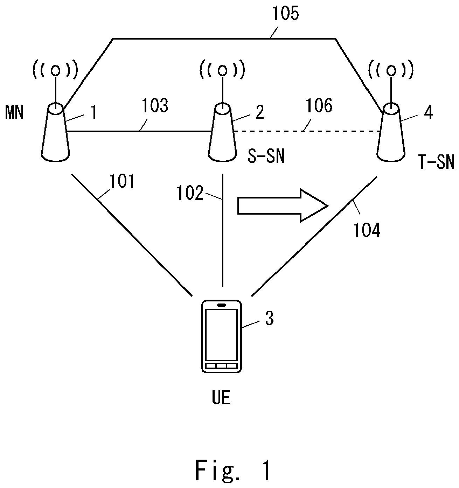

Fig. 1 shows an example configuration of a radio communication network according to a plurality of example embodiments including this example embodiment. In the example of Fig. 1, the radio communication network includes a RAN node 1, a RAN node 2, a RAN node 4, and a UE 3. Each element (or network function) shown in Fig. 1 can be implemented, for example, as a network element on dedicated hardware, as a software instance running on dedicated hardware, or as a virtualized function instantiated on an application platform.

The RAN node 1 may be a Central Unit (e.g., eNB-CU or gNB-CU) in a Cloud RAN (C-RAN) deployment, or a combination of a CU and one or more Distributed Units (e.g., eNB-DUs or gNB-DUs). The C-RAN is also referred to as a CU/DU split. The CU may include a Control Plane (CP) Unit (e.g., gNB-CU-CP) and one or more User Plane (UP) Units (e.g., gNB-CU-UPs). Accordingly, the RAN node 1 may be a CU-CP or a combination of a CU-CP and a CU-UP(s). Similarly, each of the RAN nodes 2 and 4 may be a CU or a combination of a CU and one or more DUs. Each of the RAN nodes 2 and 4 may be a CU-CP or a combination of a CU-CP and a CU-UP(s).

Each of the RAN nodes 1, 2, and 4 may be an Evolved Universal Mobile Telecommunications System (UMTS) Terrestrial Radio Access Network (EUTRAN) node or a Next Generation Radio Access Network (NG-RAN) node. The EUTRAN node may be an eNB or an en-gNB. The NG-RAN node may be a gNB or an ng-eNB. The en-gNB is a node that provides NR user plane and control plane protocol terminations towards a UE and acts as a Secondary Node (SN) in E-UTRA-NR Dual Connectivity (EN-DC). The ng-eNB is a node that provides E-UTRA user plane and control plane protocol terminations towards a UE and is connected to a 5GC via an NG interface. The Radio Access Technology (RAT) of the RAN node 1 may be different from that of the RAN nodes 2 and 4.

The RAN node 1 and the RAN node 2 communicate with each other via an inter-node interface (i.e., X2 interface or Xn interface) 103. The RAN node 1 and the RAN node 2 operate as a Master Node (MN) and a Secondary Node (SN), respectively, in dual connectivity. In addition, the RAN node 1 and the RAN node 4 communicate with each other via an inter-node interface (i.e., X2 interface or Xn interface) 105. The RAN node 1 and the RAN node 4 can operate as an MN and an SN, respectively, in DC. The RAN nodes 1, 2, and 4 support an inter-SN CPC from an SCG provided by the RAN node 2 to an SCG provided by the RAN node 4. In the following, the RAN node 1 may be referred to as MN 1, the RAN node 2 may be referred to as source SN (S-SN) 2, and the RAN node 4 may be referred to as target SN (T-SN) 4. The UE 3 communicates with the MN 1 and the S-SN 2 via air interfaces 101 and 102, and performs dual connectivity of the MCG provided by the MN 1 and an SCG provided by the S-SN 2. Further, by performing inter-SN CPC, the UE 3 communicates with the MN 1 and the T-SN 4 via the air interfaces 101 and 104 and performs dual connectivity of the MCG provided by the MN 1 and an SCG provided by the T-SN 4.

This dual connectivity may be Multi-Radio Dual Connectivity (MR-DC). The MR-DC includes E-UTRA-NR Dual Connectivity (EN-DC), NG-RAN E-UTRA-NR Dual Connectivity (NGEN-DC), NR-E-UTRA Dual Connectivity (NE-DC), and NR-NR Dual Connectivity (NR-DC). Accordingly, the MN 1 may be one of a Master eNB (in EN-DC), a Master ng-eNB (in NGEN-DC), and a Master gNB (in NR-DC and NE-DC). Similarly, each of the S-SN 2 and the T-SN 4 may be one of an en-gNB (in EN-DC), a Secondary ng-eNB (in NE-DC), and a Secondary gNB (in NR-DC and NGEN-DC). In EN-DC, the UE 3 is connected to an eNB acting as the MN 1 and to an en-gNB acting as the S-SN 2 or T-SN 4. In NGEN-DC, the UE 3 is connected to an ng-eNB acting as the MN 1 and to a gNB acting as the S-SN 2 or T-SN 4. In NE-DC, the UE 3 is connected to a gNB acting as the MN 1 and to an ng-eNB acting as the S-SN 2 or T-SN 4. In NR-DC, the UE 3 is connected to one gNB (or gNB-DU) acting as the MN 1 and to another gNB (or gNB-DU) acting as the S-SN 2 or T-SN 4.

The MCG is a group of serving cells associated with (or provided by) the MN 1, including the SpCell (i.e., Primary Cell (PCell)) and optionally one or more Secondary Cells (SCells). Meanwhile, the SCG is a group of serving cells associated with (or provided by) the S-SN 2 or T-SN 4 and includes the Primary SCG Cell (PSCell) and optionally one or more Secondary Cells (SCells). The PSCell is the Special Cell (SpCell) of the SCG and supports Physical Uplink Control Channel (PUCCH) transmission and contention-based random access. In LTE (e.g., LTE-DC and NE-DC), PSCell may be an abbreviation of Primary SCell.

As used in the present specification, the term "primary SCG cell" and its abbreviation "PSCell" stands for a cell that is included in a cell group provided by an SN in dual connectivity, has an uplink component carrier, and is configured with uplink control channel (e.g., PUCCH) resources. Specifically, the term "primary SCG cell" and its abbreviation "PSCell" may refer to a Primary SCG Cell of a cell group provided by an SN (e.g., en-gNB in EN-DC, gNB in NGEN-DC, or gNB in NR-DC) supporting 5G NR, or may refer to a Primary SCell of a cell group provided by an SN (e.g., eNB in LTE DC, or ng-eNB in NE-DC) supporting E-UTRA.

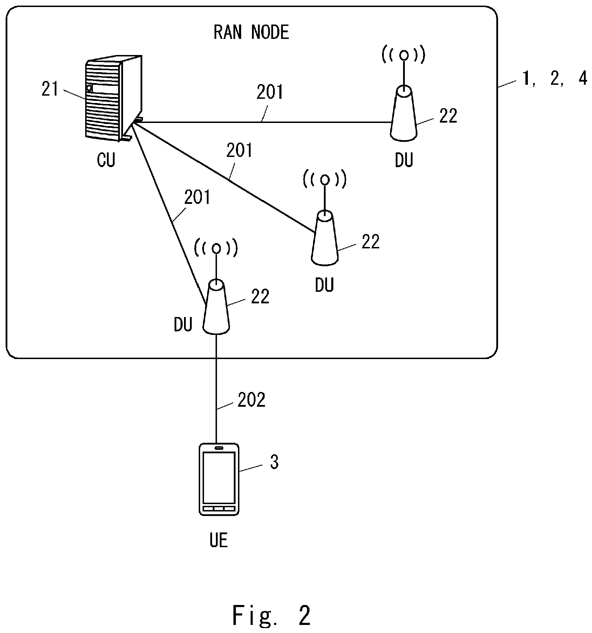

One or more of the MN 1, S-SN 2, and T-SN 4 may have the configuration shown in Fig. 2. Each element (network function) shown in Fig. 2 can be implemented, for example, as a network element on dedicated hardware, as a software instance running on dedicated hardware, or as a virtualized function instantiated on an application platform. One or more of the MN 1, S-SN 2, and T-SN 4 may include, but are not limited to, a CU 21 and one or more DUs 22 as shown in Fig. 2. The CU 21 is connected to each DU 22 via an interface 201. The UE 3 is connected to at least one DU 22 via at least one air interface 202.

The CU 21 may be a logical node that hosts Radio Resource Control (RRC), Service Data Adaptation Protocol (SDAP), and Packet Data Convergence Protocol (PDCP) protocols of the gNB (or hosts the RRC and PDCP protocols of the gNB). The DU 22 may be a logical node that hosts Radio Link Control (RLC), Medium Access Control (MAC), and Physical (PHY) layers of the gNB. If the CU 21 is a gNB-CU and the DUs 22 are gNB-DUs, then the interfaces 201 may be F1 interfaces. The CU 21 may include a CU-CP and a CU-UP(s).

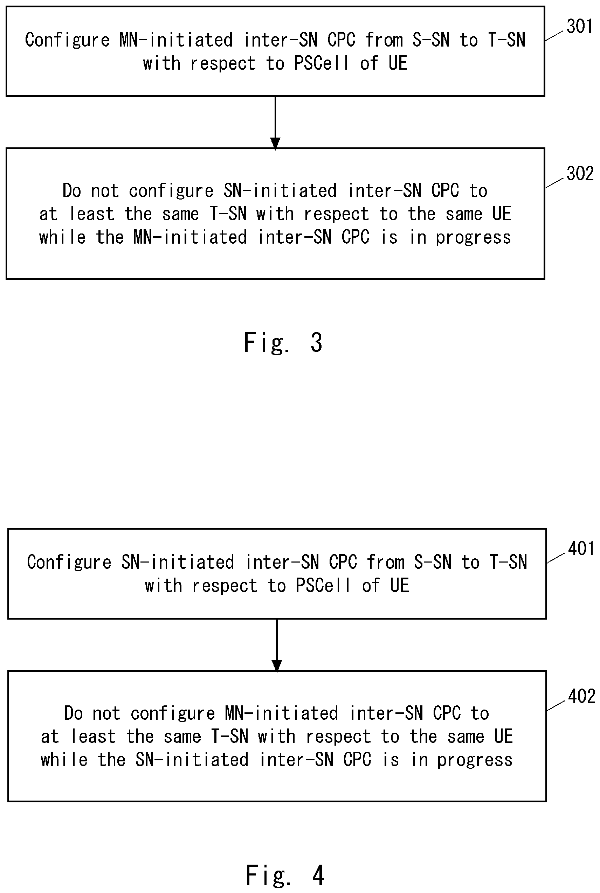

The following describes the operation of MN 1, S-SN 2, and T-SN 4 in relation to the inter-SN CPC. Fig. 3 shows an example of the operation of the MN 1. In step 301, the MN 1 configures, prepares, or triggers an MN-initiated inter-SN CPC from the S-SN 2 to the T-SN 4 with respect to the PSCell of the UE 3. Specifically, the MN 1 sends a CPC configuration to the UE 3, and the UE 3 evaluates CPC execution conditions. More specifically, the MN 1 sends an MN RRC (connection) reconfiguration message containing the CPC configuration to the UE 3 to instruct the UE 3 to perform a conditional reconfiguration for the CPC. The CPC configuration includes an SCG configuration for each of the one or more candidate PSCells and a CPC execution condition(s) for each candidate PSCell. The SCG configuration may be the configuration of a candidate PSCell (or target PSCell). The SCG configuration (or PSCell configuration) may be an SN RRC Reconfiguration message containing the SCG configuration. The CPC configuration may be a ConditionalReconfiguration IE in the MN RRC (Connection) Reconfiguration message. The ConditionalReconfiguration IE may contain a condReconfigToAddModList IE. The condReconfigToAddModList IE may associate the PSCell configuration (e.g., SN RRC Reconfiguration message) of each candidate PSCell with the corresponding CPC execution condition(s).

As an example, and not a limitation, the MN-initiated inter-SN CPC may be configured, prepared, or triggered as follows. The MN 1 initiates an inter-SN CPC procedure by requesting the T-SN 4 to allocate resources for the UE 3 using an SN Addition procedure. Specifically, the MN 1 may send an SN Addition Request message (e.g., SgNB Addition Request or S-NODE Addition Request) to the T-SN 4. In this message, the MN 1 may indicate the CPC initiation to the T-SN 4 and provide the upper limit (or maximum number) of candidate cells (or candidate PSCells) to the T-SN 4. The T-SN 4 sends the cell identifiers (e.g., PSCell ID(s)) of one or more prepared candidate PSCells to the MN 1 via a SN Addition Request Acknowledge message. In addition, the T-SN 4 sends an SCG configuration (e.g., CG-Config) of each accepted candidate PSCell to the MN 1 via the SN Addition Request Acknowledge message. The MN 1 generates one or more CPC execution conditions for each candidate PSCell. The MN 1 then sends a CPC configuration (e.g., ConditionalReconfiguration IE) to the UE 3 via an MN RRC (Connection) Reconfiguration message. The CPC configuration contains the SCG configurations set by the T-SN 4 for one or more candidate PSCells and the CPC execution conditions set by the MN 1 for these one or more candidate PSCells. The MN 1 may notify the S-SN 2 that the MN-initiated inter-SN CPC has been set, prepared, or triggered. This notification may be sent to the S-SN 2 via an SN Release Request message (e.g., SgNB Release Request or S-NODE Release Request). The SN Release Request message may contain a new X2/Xn IE (e.g., CPC indication, CPC preparation indication/notification) or a new Cause (e.g., CPC is prepared/configured). Alternatively, the notification may be sent to the S-SN 2 via a new X2/Xn message (e.g., MN-initiated CPC notification). This SN Release Request message or new X2/Xn message may contain the identifier of the T-SN 4 (e.g., global gNB/NG-RAN node ID).

In step 302, the MN 1 does not configure an SN-initiated inter-SN CPC to at least the same T-SN 4 with respect to the same UE 3 while the MN-initiated inter-SN CPC is in progress. The expression that the MN-initiated inter-SN CPC is in progress can be rephrased as the MN-initiated inter-SN CPC has been prepared, configured, or triggered. The ongoing MN-initiated inter-SN CPC can refer to a situation where the MN-initiated inter-SN CPC has been prepared and this CPC has not been successfully completed or cancelled. The successful completion of the CPC is notified to the MN 1 by the UE 3 sending an MN RRC (Connection) Reconfiguration Complete message to the MN 1 containing the SN RRC Reconfiguration Complete message in response to the CPC execution conditions being met. The cancellation of the CPC is performed, for example, by the MN 1 notifying the UE 3 of the cancellation or removal of the conditional reconfiguration for the CPC and the MN 1 receiving a response from the UE 3.

Specifically, the MN 1 may notify the S-SN 2 that an MN-initiated inter-SN CPC is in progress. This notification may be sent to the S-SN 2 via an SN Release Request message (e.g., SgNB Release Request) or other X2/Xn messages as described above. Upon receipt of this message, the S-SN 2 may understand that an MN-initiated inter-SN CPC is in progress and may suppress the initiation of an SN-initiated inter-SN CPC procedure to the same T-SN 4 with respect to the same UE 3. Additionally or alternatively, if the MN 1 receives an inter-node message from the S-SN 2 indicating a request for an SN-initiated inter-SN CPC to the same T-SN 4 while an MN-initiated inter-SN CPC is in progress, it may send a response message to the S-SN 2 indicating that the request is rejected because an MN-initiated inter- SN CPC is in progress.

According to the operation described with reference to Fig. 3, while an MN-initiated inter-SN CPC is in progress with respect to the UE 3, the MN 1 can prevent an SN-initiated inter-SN CPC to at least the same T-SN 4 with respect to the same UE 3 from proceeding simultaneously. This can help to avoid complex processing in the network (e.g., one or both MN 1 and T-SN 4). This can also help to avoid complex processing in UE 3.

In step 302, the MN 1 may operate not to configure an SN-initiated inter-SN CPC to the same T-SN 4 with respect to the same UE 3 while an MN-initiated inter-SN CPC is in progress. In other words, the MN 1 may decide on a per-T-SN basis whether to configure a new SN-initiated inter-SN CPC with respect to the UE 3. This can allow the MN 1 to determine in more detail which inter-SN CPC procedures should be suppressed with respect to the UE 3. This may help to avoid excessive suppression of SN-initiated inter-SN CPC procedures with respect to the UE 3. Alternatively, while an MN-initiated inter-SN CPC is in progress with respect to the UE 3, the MN 1 may operate to not configure an SN-initiated inter-SN CPC to any T-SN with respect to the same UE 3. In other words, the MN 1 may decide on a per-UE basis whether to configure a new SN-initiated inter-SN CPC with respect to the UE 3. This can, for example, contribute to avoiding complex processing in the MN 1 and the UE 3.

Fig. 4 shows an example of the operation of the MN 1. In step 401, the MN 1 configures, prepares, or triggers an SN-initiated inter-SN CPC from the S-SN 2 to the T-SN 4 with respect to the PSCell of the UE 3. Specifically, the MN 1 sends a CPC configuration to the UE 3, and the UE 3 evaluates CPC execution conditions. More specifically, the MN 1 sends an MN RRC (connection) reconfiguration message containing the CPC configuration to the UE 3 to instruct the UE 3 to perform a conditional reconfiguration for the CPC. The CPC configuration includes an SCG configuration for each of the one or more candidate PSCells and a CPC execution condition(s) for each candidate PSCell. The SCG configuration may be the configuration of a candidate PSCell (or target PSCell). The SCG configuration (or PSCell configuration) may be an SN RRC Reconfiguration message containing the SCG configuration. The CPC configuration may be a ConditionalReconfiguration IE in the MN RRC (Connection) Reconfiguration message. The ConditionalReconfiguration IE may contain a condReconfigToAddModList IE. The condReconfigToAddModList IE may associate the PSCell configuration (e.g., SN RRC Reconfiguration message) of each candidate PSCell with the corresponding CPC execution condition(s).

As an example, and not a limitation, the SN-initiated inter-SN CPC may be configured, prepared, or triggered as follows. The S-SN 2 initiates an inter-SN CPC procedure by sending an SN Change Required message (e.g., SgNB Change Required or S-NODE Change Required) to the MN 1. In this message, the S-SN 2 indicates the CPC initiation to the MN 1. This message contains the identifier of the T-SN 4 (e.g., global gNB/NG-RAN node ID). This message also contains CPC execution conditions. The MN 1 may or may not be able to comprehend the CPC execution conditions set by the S-SN 2. The CPC execution conditions may be included in an RRC container (e.g., CG-Config, or RRC-level IE) transparent to the MN 1. The MN 1 then requests the T-SN 4 to allocate resources for the UE 3 using an SN Addition procedure. Specifically, the MN 1 may send an SN Addition Request message (e.g., SgNB Addition Request or S-NODE Addition Request) to the T-SN 4. In this message, the MN 1 may indicate the CPC initiation to the T-SN 4 and provide the T-SN 4 with the upper limit of candidate PSCells. The T-SN 4 sends the PSCell ID(s) of one or more prepared (or accepted) candidate PSCells to the MN 1 via a SN Addition Request Acknowledge message. In addition, the T-SN 4 sends an SCG configuration (e.g., CG-Config) of each accepted candidate PSCell to the MN 1 via the SN Addition Request Acknowledge message. The MN 1 sends a CPC configuration (e.g., ConditionalReconfiguration IE) to the UE 3 via an MN RRC (Connection) Reconfiguration message. The CPC configuration contains the SCG configurations set by the T-SN 4 for one or more candidate PSCells and the CPC execution conditions set by the S-SN 2 for these one or more candidate PSCells. The MN 1 may notify the S-SN 2 that the SN-initiated inter-SN CPC has been set, prepared, or triggered. This notification may be sent to the S-SN 2 via an SN Change Confirm message (e.g., SgNB Change Confirm). Alternatively, this notification may be sent to the S-SN 2 via other X2/Xn messages, e.g., a Conditional PSCell Change Notification message.

In step 402, the MN 1 does not configure an MN-initiated inter-SN CPC to at least the same T-SN 4 with respect to the same UE 3 while the SN-initiated inter-SN CPC is in progress. The expression that the SN-initiated inter-SN CPC is in progress can be rephrased as the SN-initiated inter-SN CPC has been prepared, configured, or triggered. The ongoing SN-initiated inter-SN CPC can refer to a situation where the SN-initiated inter-SN CPC has been prepared and this CPC has not been successfully completed or cancelled. The successful completion of the CPC is notified to the MN 1 by the UE 3 sending an MN RRC (Connection) Reconfiguration Complete message to the MN 1 containing the SN RRC Reconfiguration Complete message in response to the CPC execution conditions being met. The cancellation of the CPC is performed, for example, by the MN 1 notifying the UE 3 of the cancellation or removal of the conditional reconfiguration for the CPC and the MN 1 receiving a response from the UE 3.

Note that the S-SN 2 may not know the identifier (e.g., global gNB/NG-RAN node ID) of the T-SN 4. In particular, the S-SN 2 may know the identifier of a neighboring cell but not the identifier of the RAN node serving that neighboring cell. In this case, the cell identifier (e.g., Cell Global Identifier (CGI), or a combination of Physical Cell Identity (PCI) and frequency) of the candidate cell (candidate PSCell) may be used instead of the identifier of the T-SN 4. For example, in step 401, the S-SN 2 may specify the identifier of the candidate cells (candidate PSCells) to the MN 1 in an inter-node message (e.g., SN Change Required message) to initiate the inter-SN CPC procedure. The MN 1 may obtain the identifier (e.g., global gNB/NG-RAN node) of the T-SN 4 based on the correspondence between the cell identifiers and the RAN node identifiers of the neighboring cells maintained by it. Similarly, in step 402, the MN 1 may detect the T-SN 4 with which the SN-initiated inter-SN CPC is in progress based on the correspondence between the neighbor cell identifiers and the T-SN 4 identifier (e.g., global gNB/NG-RAN node) that it maintains.

According to the operation described with reference to Fig. 4, while an SN-initiated inter-SN CPC is in progress with respect to the UE 3, the MN 1 can prevent an MN-initiated inter-SN CPC to at least the same T-SN 4 with respect to the same UE 3 from proceeding at the same time. This can help to avoid complex processing in the network (e.g., one or both MN 1 and T-SN 4). This can also help to avoid complex processing in UE 3.

In step 402, while an SN-initiated inter-SN CPC is in progress with respect to the UE 3, the MN 1 may operate not to configure an MN-initiated inter-SN CPC only to the same T-SN 4 with respect to the same UE 3. In other words, the MN 1 may decide on a per-T-SN basis whether to configure a new MN-initiated inter-SN CPC with respect to the UE 3. This can allow the MN 1 to determine in more detail which inter-SN CPC procedures should be suppressed with respect to UE 3. This may help to avoid excessive suppression of MN-initiated inter-SN CPC procedures with respect to the UE 3. Alternatively, while an SN-initiated inter-SN CPC is in progress with respect to the UE 3, the MN 1 may operate to not configure an MN-initiated inter-SN CPC to any T-SN with respect to the same UE 3. In other words, the MN 1 may decide on a per-UE basis whether to configure a new MN-initiated inter-SN CPC with respect to the UE 3. This can, for example, contribute to avoiding complex processing in the MN 1 and the UE 3.

The MN 1 may perform only one of the operations described in Fig. 3 and in Fig. 4, or both.

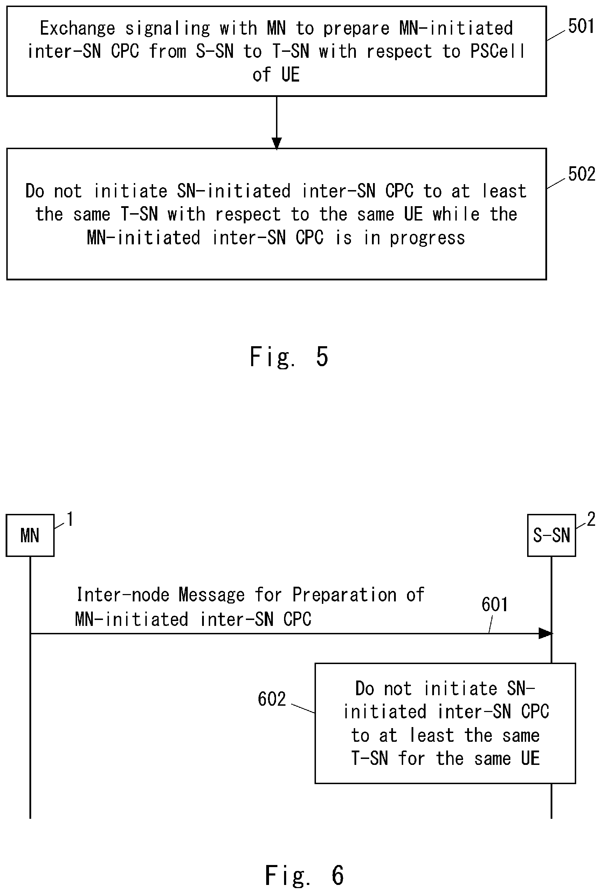

Fig. 5 shows an example of the operation of the S-SN 2. In step 501, the S-SN 2 exchanges signaling (i.e., X2/Xn messages) with the MN 1 to prepare an MN-initiated inter-SN CPC from the S-SN 2 to the T-SN 4 with respect to the PSCell of the UE 3. As an example, and not a limitation, the S-SN 2 may be notified by the MN 1 that the MN-initiated inter-SN CPC has been configured, prepared, or triggered. This notification may be sent from the MN 1 to the S-SN 2 via an SN Release Request message (e.g., SgNB Release Request or S-NODE Release Request). The SN Release Request message may contain a new X2/Xn IE (e.g., CPC indication, CPC preparation indication/notification) or a new Cause (e.g., CPC is prepared/configured). Alternatively, this notification may be sent to the S-SN 2 via another X2/Xn message (e.g., Conditional PSCell Change Notification message). This notification may be sent to the S-SN 2 via a new X2/Xn message (e.g., MN-initiated CPC notification). The SN Release Request message or another (or new) X2/Xn message may contain the identifier (e.g., global gNB/NG-RAN node ID) of the T-SN 4. The S-SN 2 may send a response message (e.g., SgNB Release Request Acknowledge or S-NODE Release Request Acknowledge) to the MN 1.

In step 502, the S-SN 2 does not initiate an SN-initiated inter-SN CPC to at least the same T-SN 4 with respect to the same UE 3 while the MN-initiated inter-SN CPC is in progress. The expression that the MN-initiated inter-SN CPC is in progress can be rephrased as the MN-initiated inter-SN CPC has been prepared, configured, or triggered. The ongoing MN-initiated inter-SN CPC can refer to a situation where the MN-initiated inter-SN CPC has been prepared and this CPC has not been successfully completed or cancelled. The successful completion of the CPC is notified to the MN 1 by the UE 3 sending an MN RRC (Connection) Reconfiguration Complete message to the MN 1 containing the SN RRC Reconfiguration Complete message in response to the CPC execution conditions being met. The cancellation of the CPC is performed, for example, by the MN 1 notifying the UE 3 of the cancellation or removal of the conditional reconfiguration for the CPC and the MN 1 receiving a response from the UE 3.

For example, if the S-SN 2 receives a notification from the MN 1 indicating that an MN-initiated inter-SN CPC is in progress, has been prepared, or has been triggered (step 501), the S-SN 2 may operate not to initiate an SN-initiated inter-SN CPC to the same T-SN 4 with respect to the same UE 3. More specifically, if the S-SN 2 receives an inter-node message (e.g., SN Release Request message) from the MN 1 containing information indicating that this message is for a CPC during the procedure for preparing an MN-initiated inter-SN CPC (step 501), it may operate not to initiate an SN-initiated inter-SN CPC to the same T-SN 4 with respect to the same UE 3.

Fig. 6 shows an example of the operation of the MN 1 and the S-SN 2. The procedure shown in Fig. 6 is similar to the procedure shown in Fig. 5. Specifically, in step 601, the MN 1 sends to the S-SN 2 an inter-node message for preparation of an MN-initiated inter-SN CPC. This message indicates to the S-SN 2 that the MN-initiated inter-SN CPC is in progress, has been prepared, or has been triggered. This message may be an SN Release Request message (e.g., SgNB Release Request or S-NODE Release Request). The SN Release Request message may contain a new X2/Xn IE (e.g., CPC indication, CPC preparation indication/notification) or a new Cause (e.g., CPC is prepared/configured). Alternatively, this message may be another X2/Xn message (e.g., Conditional PSCell Change Notification message). This message may be a new X2/Xn message. The inter-node message of step 601 may contain the identifier of the T-SN 4 (e.g., global gNB/NG-RAN node ID).

Step 602 is similar to step 502 in Fig. 5. Specifically, in step 602, the S-SN 2 operates not to initiate an SN-initiated inter-SN CPC to at least the same T-SN 4 with respect to the same UE 3, in response to receiving the message of step 602.

As already explained, the S-SN 2 may not know the identifier (e.g., global gNB/NG-RAN node ID) of the T-SN 4. In particular, the S-SN 2 may know the identifier of a neighboring cell but not the identifier of the RAN node serving that neighboring cell. In this case, the cell identifier (e.g., Cell Global Identifier (CGI), or a combination of Physical Cell Identity (PCI) and frequency) of the candidate cell (candidate PSCell) may be used instead of the identifier of the T-SN 4. For example, in steps 501 and 601, the MN 1 may indicate the identifier of the candidate cells (candidate PSCells) to the S-SN 2 in an inter-node message (e.g., SN Release Request message) for the preparation of the MN-initiated inter-SN CPC. The S-SN 2 may obtain the identifier (e.g., global gNB/NG-RAN node) of the T-SN 4 based on the correspondence between the cell identifiers and the RAN node identifiers of the neighboring cells maintained by it. Similarly, in steps 502 and 602, the S-SN 2 may detect the T-SN 4 with which the MN-initiated inter-SN CPC is in progress based on the correspondence between the neighbor cell identifiers and the T-SN 4 identifier (e.g., global gNB/NG-RAN node) that it maintains.

According to the operation described with reference to Figs. 5 and 6, while an MN-initiated inter-SN CPC is in progress with respect to the UE 3, the S-SN 2 can prevent an SN-initiated inter-SN CPC to at least the same T-SN 4 with respect to the same UE 3 from proceeding simultaneously. This can help to avoid complex processing in the network (e.g., one or both MN 1 and T-SN 4). This can also help to avoid complex processing in UE 3.

In steps 502 and 602, while an MN-initiated inter-SN CPC is in progress with respect to the UE 3, the S-SN 2 may operate not to initiate an SN-initiated inter-SN CPC only to the same T-SN 4 with respect to the same UE 3. In other words, the S-SN 2 may decide on a per-T-SN basis whether to initiate a new SN-initiated inter-SN CPC with respect to the UE 3. This can allow the S-SN 2 to determine in more detail which inter-SN CPC procedures should be suppressed with respect to the UE 3. This may help to avoid excessive suppression of SN-initiated inter-SN CPC procedures with respect to the UE 3. Alternatively, while an MN-initiated inter-SN CPC is in progress with respect to the UE 3, the MN 1 may operate to not initiate an SN-initiated inter-SN CPC to any T-SN with respect to the same UE 3. In other words, the S-SN 2 may decide on a per-UE basis whether to initiate a new SN-initiated inter-SN CPC with respect to the UE 3. This can, for example, contribute to avoiding complex processing in the MN 1, S-SN 2, and the UE 3.

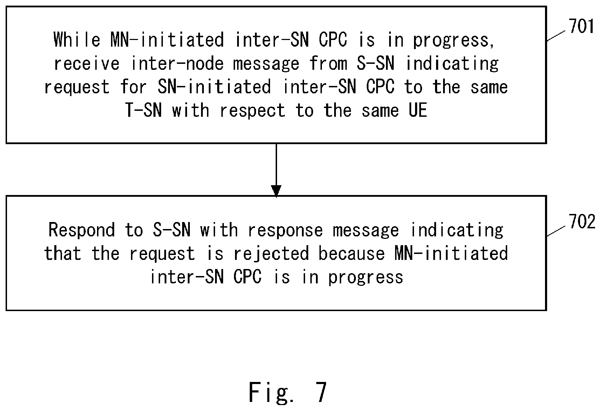

Fig. 7 shows an example of the operation of the MN 1. In step 701, while an MN-initiated inter-SN CPC to the T-SN 4 is in progress with respect to the UE 3, the MN 1 receives an inter-node message from the S-SN 2 indicating a request for an SN-initiated inter-SN CPC to the same T-SN 4 with respect to UE 3. This message may be an SN Change Required message (e.g., SgNB Change Required or S-NODE Change Required). In the message, the S-SN 2 indicates the CPC initiation to the MN 1. The message may contain the identifier of the T-SN 4 and the CPC execution conditions.

In step 702, the MN 1 responds to the S-SN 2 with a response message indicating that the request is rejected because an MN-initiated inter-SN CPC is in progress. The response message may be an SN Change Refuse message (e.g., SgNB Change Refuse or S-NODE Change Refuse). The response message causes the S-SN 2 not to initiate a new SN-initiated inter-SN CPC to the T-SN 4 with respect to the UE 3. In some implementations, the response message of step 702 is an SN Change Refuse message, and the response message may contain a new X2/Xn IE (e.g., CPC preparation indication/notification) or a new cause (e.g., CPC is prepared/configured).

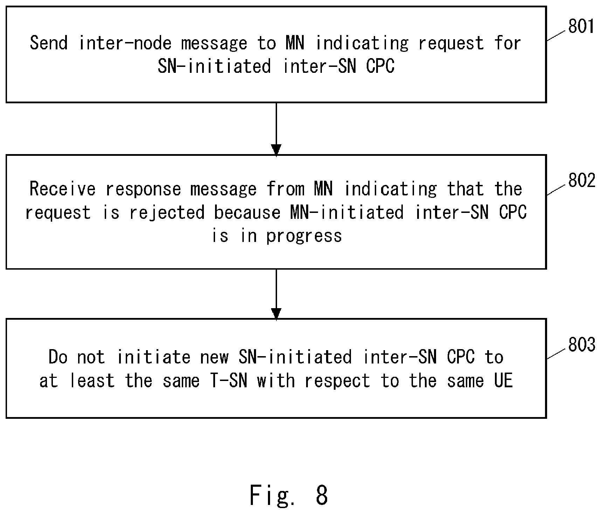

Fig. 8 shows an example of the operation of the S-SN 2. The operation of the S-SN 2 shown in Fig. 8 corresponds to the operation of the MN 1 shown in Fig. 7. In step 801, the S-SN 2 sends an inter-node message to the MN 1 indicating a request for an SN-initiated inter-SN CPC. This message may be an SN Change Required message (e.g., SgNB Change Required or S-NODE Change Required). In step 802, the S-SN 2 receives a response message from the MN 1 indicating that the request of step 801 is rejected. The response message indicates that the request is rejected because an MN-initiated inter-SN CPC is in progress. The response message may be an SN Change Refuse message (e.g., SgNB Change Refuse or S-NODE Change Refuse). In step 803, upon receipt of the response message, the S-SN 2 operates not to trigger a new SN-initiated inter-SN CPC to the same T-SN 4 with respect to the same UE 3.

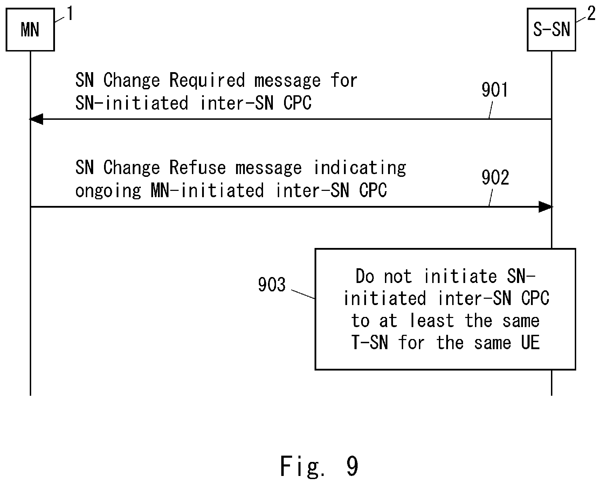

Fig. 9 shows an example of the operation of the MN 1 and the S-SN 2. The procedure shown in Fig. 9 is based on the operation of the MN 1 shown in Fig. 7 and the operation of the S-SN 2 shown in Fig. 8. In step 901, the S-SN 2 sends an inter-node message (e.g., SN Change Required) to the MN 1 for an SN-initiated inter-SN CPC. In step 902, the MN 1 responds to the S-SN 2 with a rejection message (e.g., SN Change Refuse). The rejection message indicates that the request is rejected because an MN-initiated inter-SN CPC is in progress. In step 903, upon receipt of the rejection message, the S-SN 2 operates to not initiate (or trigger) a new SN-initiated inter-SN CPC to the same T-SN 4 with respect to the same UE 3.

As already explained, the S-SN 2 may not know the identifier (e.g., global gNB/NG-RAN node ID) of the T-SN 4. In particular, the S-SN 2 may know the identifier of a neighboring cell but not the identifier of the RAN node serving that neighboring cell. In this case, the cell identifier (e.g., Cell Global Identifier (CGI), or a combination of Physical Cell Identity (PCI) and frequency) of the candidate cell (candidate PSCell) may be used instead of the identifier of the T-SN 4. For example, in steps 701, 801, and 901, the S-SN 2 may indicate the identifier of the candidate cells (candidate PSCells) to the MN 1 in an inter-node message (e.g., SN Change Required message) to initiate the inter-SN CPC procedure. The MN 1 may obtain the identifier (e.g., global gNB/NG-RAN node) of the T-SN 4 based on the correspondence between the cell identifiers and the RAN node identifiers of the neighboring cells maintained by it. In steps 702, 802, and 902, the MN 1 may indicate the identifier of the rejected candidate cells (candidate PSCells) to the S-SN 2 in the rejection message (e.g., SN Change Refuse message). The S-SN 2 may obtain the identifier (e.g., global gNB/NG-RAN node) of the T-SN 4 based on the correspondence between the cell identifiers and the RAN node identifiers of the neighboring cells maintained by it. Similarly, in steps 803 and 903, the S-SN 2 may detect the T-SN 4 with which the MN-initiated inter-SN CPC is in progress based on the correspondence between the neighbor cell identifiers and the T-SN 4 identifier (e.g., global gNB/NG-RAN node) that it maintains.

According to the operation described with reference to Figs. 7, 8, and 9, while an MN-initiated inter-SN CPC is in progress with respect to the UE 3, the MN 1 and the S-SN 2 can prevent an SN-initiated inter-SN CPC to at least the same T-SN 4 with respect to the same UE 3 from proceeding simultaneously. This can help to avoid complex processing in the network (e.g., one or both MN 1 and T-SN 4). This can also help to avoid complex processing in UE 3.

In step 702, 802, and 902, while an MN-initiated inter-SN CPC is in progress with respect to the UE 3, the MN 1 may operate not to accept an SN-initiated inter-SN CPC only to the same T-SN 4 with respect to the same UE 3. In other words, the MN 1 may decide on a per-T-SN basis whether to accept a request for a new SN-initiated inter-SN CPC with respect to the UE 3. Similarly, in steps 803 and 903, while an MN-initiated inter-SN CPC is in progress with respect to the UE 3, the S-SN 2 may operate not to initiate a new SN-initiated inter-SN CPC only to the same T-SN 4 with respect to the same UE 3. In other words, the S-SN 2 may decide on a per-T-SN basis whether to initiate a new SN-initiated inter-SN with respect to the UE 3. This can allow the MN 1 and the S-SN 2 to determine in more detail which inter-SN CPC procedures should be suppressed with respect to UE 3. This may help to avoid excessive suppression of SN-initiated inter-SN CPC procedures with respect to the UE 3. Alternatively, while an MN-initiated inter-SN CPC is in progress with respect to the UE 3, the MN 1 may operate to not accept an SN-initiated inter-SN CPC to any T-SN with respect to the same UE 3. In other words, the MN 1 may decide on a per-UE basis whether to accept a request for a new SN-initiated inter-SN CPC with respect to the UE 3. Similarly, while an MN-initiated inter-SN CPC is in progress with respect to the UE 3, the S-SN 2 may operate not to initiate an SN-initiated inter-SN CPC to any T-SN with respect to the same UE 3. In other words, the S-SN 2 may decide on a per-UE basis whether to initiate a new SN-initiated inter-SN CPC with respect to the UE 3. This can, for example, help to avoid complex processing in the MN 1, the S-SN 2, and the UE 3.

### Second Example Embodiment

The example configuration of a radio communication network according to this example embodiment is the same as the examples shown in Figs. 1 and 2. The following describes the operation of the MN 1 and the S-SN 2 with respect to the inter-SN CPC.

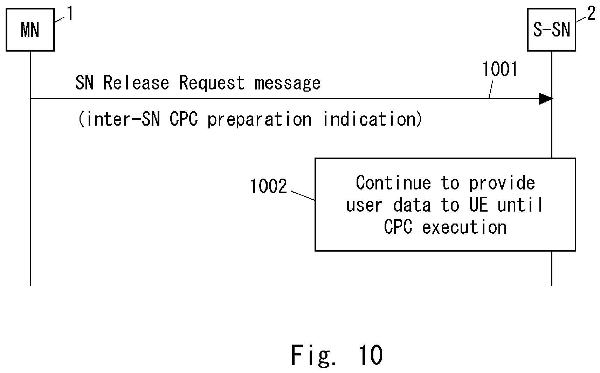

Fig. 10 shows an example of the operation of the MN 1 and the S-SN 2. In step 1001, during the procedure for preparing an MN-initiated inter-SN CPC from the S-SN 2 to the T-SN 4 with respect to a PSCell of the UE 3, the MN 1 sends an SN Release Request message (e.g., SgNB Release Request or S-NODE Release Request) to the S-SN 2 containing information indicating that this message is for an inter-SN CPC. This information may be a new X2/Xn IE (e.g., CPC indication, CPC preparation indication/notification) contained in the SN Release Request message. Alternatively, this information may be a new Cause (e.g., CPC preparation/mobility, CPC is prepared/requested/configured) contained in the SN Release Request message. The procedure for preparing an MN-initiated inter-SN CPC may include several steps to allow the UE 3 to initiate the evaluation of CPC execution conditions by sending a CPC configuration containing the CPC execution conditions and an SCG configuration from the MN 1 to the UE 3.

The SN Release Request message of step 1001 causes the S-SN 2 to continue providing user data to the UE 3 until a future CPC execution. In step 1002, upon receipt of the SN Release Request message, the S-SN 2 continues to provide user data to the UE 3 until a future CPC execution. In other words, the S-SN 2 receives the SN Release Request message but does not stop providing user data to the UE 3.

The behavior described with reference to Fig. 10 allows the S-SN 2 to recognize that an SN Release Request message is for an inter-SN CPC. In other words, the S-SN 2 can distinguish whether an SN Release Request message received in the preparation procedure for an MN-initiated inter-SN CPC is for a normal SCG release (or SN change) or for an inter-SN CPC. This helps to prevent the S-SN 2 from stopping the provision of user data to the UE 3 in response to the receipt of the SN Release Request message before the CPC execution condition is satisfied.

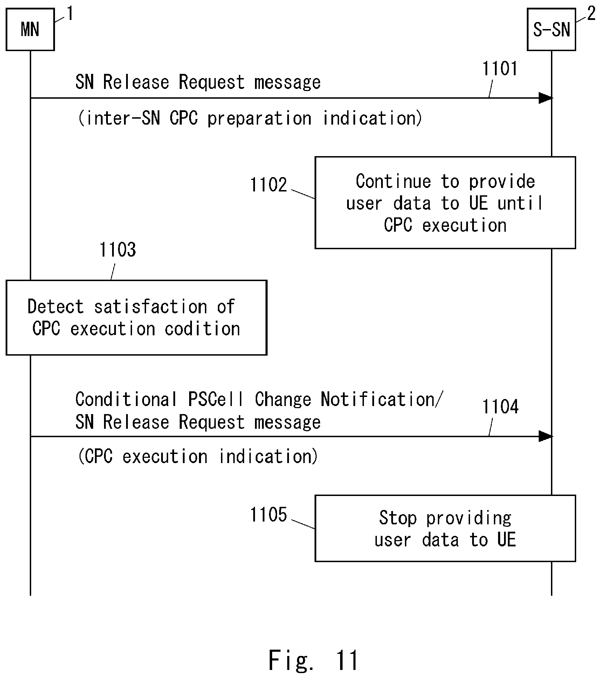

Fig. 11 shows an example of the operation of the MN 1 and the S-SN 2. Steps 1101 and 1102 are similar to steps 1001 and 1002 in Fig. 10. In step 1103, the MN 1 detects the satisfaction of an execution condition of an inter-SN CPC. The MN 1 may detect the satisfaction of the execution condition of inter-SN CPC by receiving an RRC message sent from the UE 3 in response to the satisfaction of the CPC execution condition. More specifically, upon the satisfaction of the CPC execution condition, the UE 3 may send to the MN 1 an MN RRC (Connection) Reconfiguration Complete message containing an SN RRC Reconfiguration Complete message (to the T-SN3). The MN 1 may detect the satisfaction of the inter-SN CPC execution condition by receiving this MN RRC (Connection) Reconfiguration Complete message containing the SN RRC Reconfiguration Complete message. Additionally or alternatively, the UE 3 may send to the MN 1 in this RRC message information indicating for which candidate cell (candidate PSCell) the inter-SN CPC execution condition has been satisfied (i.e., for which candidate cell the CPC is to be executed).

If the MN RRC connection reconfiguration procedure is successful, the MN 1 informs the T-SN 4 via an SN Reconfiguration Complete message containing the SN RRC Reconfiguration Complete message received from the UE 3 (not shown). In addition, in step 1104, the MN 1 sends an inter-node message to the S-SN 2 in response to the CPC execution or the satisfaction of the CPC execution condition. The inter-node message may be a Conditional PSCell Change Notification message or an (additional) SN Release Request message. The message of step 1104 may include an indication of CPC execution or an indication of satisfaction of the CPC execution condition. In step 1105, the S-SN 2 stops providing user data to the UE 3 in response to receiving the message of step 1104. Additionally, if applicable, the S-SN 2 may initiate data forwarding.

The operation described with reference to Fig. 11 allows the S-SN 2 to stop providing user data to the UE 3 at the appropriate time in the case of an MN initiated CPC.

### Third Example Embodiment

The example configuration of a radio communication network according to this example embodiment is the same as the examples shown in Figs. 1 and 2. The following describes the operation of the MN 1, S-SN 2, and T-SN 4 with respect to the inter-SN CPC.

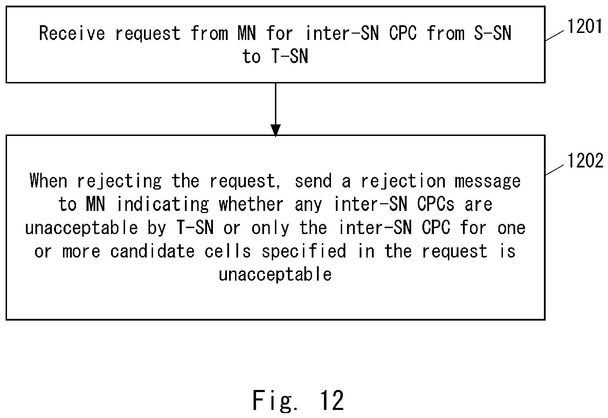

Fig. 12 shows an example of the operation of the T-SN 4. In step 1201, the T-SN 4 receives a request from the MN 1 for an inter-SN CPC from the S-SN 2 to the T-SN 4 with respect to the UE 3. This inter-SN CPC can be initiated by the MN 1 or by the S-SN 2. The request message of step 1201 may be a SN Addition Request message (e.g., SgNB Addition Request or S-NODE Addition Request). In this message, the MN 1 may indicate the CPC initiation to the T-SN 4 and provide the T-SN 4 with the upper limit (or maximum number) of candidate PSCells.

In step 1202, the T-SN 4 decides to reject the request and sends a rejection message to the MN 1. The rejection message may be an SN Addition Request Reject (e.g., SgNB Addition Request Reject or S-NODE Addition Request Reject). This rejection message indicates whether any inter-SN CPCs are unacceptable by the T-SN 4 or only the inter-SN CPC for one or more candidate cells (candidate PSCells) specified in the request. This rejection message indicates whether any inter-SN CPCs are unacceptable by the T-SN 4 or only the inter-SN CPC for one or more candidate cells (candidate PSCells) specified in the request is unacceptable. Specifically, the rejection message may indicate one of several causes, including first and second causes. The first cause indicates that the T-SN 4 is unable to accept any inter-SN CPC. In contrast, the second cause indicates that the T-SN 4 is capable of accepting an inter-SN CPC but is unable to accept an inter-SN CPC with respect to all of the one or more candidate cells specified in the request.

The operation described with reference to Fig. 12 allows the MN 1 to distinguish between multiple causes of inter-SN CPC rejection. In particular, the MN 1 can know if the T-SN 4 cannot accept any inter-SN CPCs at all. In other words, the MN 1 can determine whether all inter-SN CPCs are unacceptable by the T-SN 4 or only the inter-SN CPC for one or more candidate cells specified in the request is unacceptable. If the T-SN 4 can accept an inter-SN CPC, but only the inter-SN CPC of one or more candidate cells specified in the request is rejected, the MN 1 may send a request to the T-SN 4 for a new inter-SN CPC specifying other candidate PSCells. This would prevent undue restriction of inter-SN CPC opportunities.

In the case of an SN-initiated inter-SN CPC, the MN 1 may notify the S-SN 2 of the cause of the CPC rejection. This notification may be sent to the S-SN 2 via an SN Change Refuse message (e.g., SgNB Change Refuse or S-NODE Change Refuse). This allows the S-SN 2 to determine whether any inter-SN CPCs are unacceptable by the T-SN 4 or only the inter-SN CPC for one or more candidate cells specified in the request is unacceptable. If the T-SN 4 can accept an inter-SN CPC, but only the inter-SN CPC to one or more candidate cells specified in the request is rejected, the S-SN 2 may send a request to the T-SN 4 via the MN 1 for a new inter-SN CPC specifying other candidate PSCells. This would prevent undue restriction of inter-SN CPC opportunities.

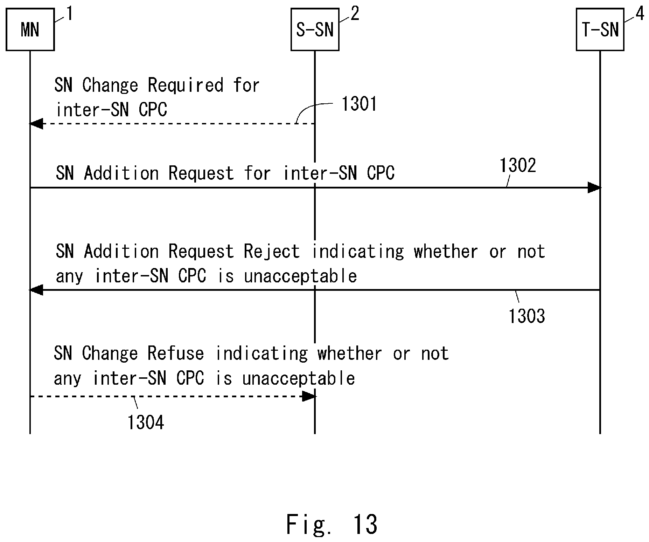

Fig. 13 shows an example of the operation of the MN 1, S-SN 2, and T-SN 4. For an SN-initiated inter-SN CPC, in step 1301, the S-SN 2 sends to the MN 1 an SN Change Required message for an inter-SN CPC. In the case of an MN-initiated inter-SN CPC, step 1301 is skipped. In step 1302, the MN 1 sends a SN Addition Request message to the T-SN 4 for an inter-SN CPC. Step 1302 corresponds to step 1201 in Fig. 12. In step 1303, the T-SN 4 responds to the MN 1 with an SN Addition Request Reject message. The SN Addition Request Reject message indicates whether or not the T-SN 4 cannot accept any inter-SN CPCs. Step 1303 corresponds to step 1202 in Fig. 12. In the case of an SN-initiated inter-SN CPC, in step 1304, the MN 1 responds to the T-SN2 with an SN Change Refuse message. The SN Change Refuse message indicates whether or not the T-SN 4 is unable to accept any inter-SN CPCs.

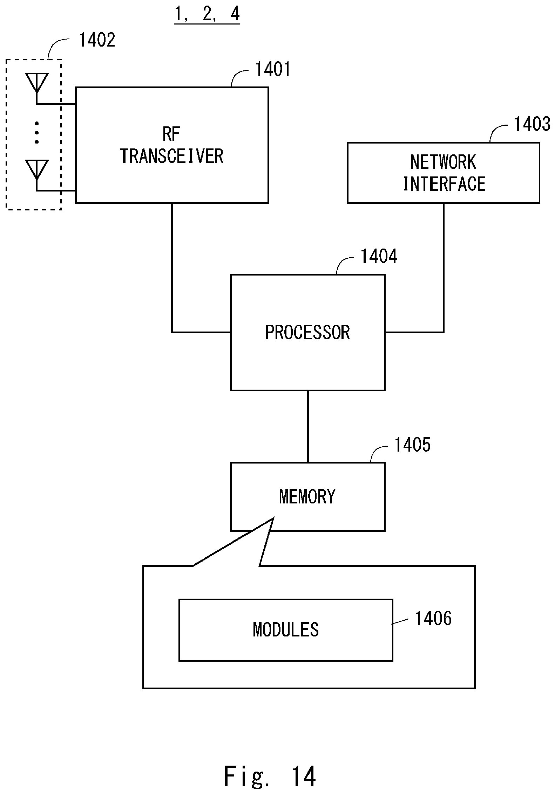

The following provides configuration examples of the MN 1, S-SN 2, T-SN 4, and UE 3 according to the above-described example embodiments. Fig. 14 is a block diagram showing a configuration example of the MN 1 according to the example embodiments described above. The configuration of the S-SN 2 and T-SN 4 may be the same as that shown in Fig. 14. Referring to Fig. 14, the MN 1 includes a Radio Frequency transceiver 1401, a network interface 1403, a processor 1404, and a memory 1405. The RF transceiver 1401 performs analog RF signal processing to communicate with UEs including the UE 3. The RF transceiver 1401 may include a plurality of transceivers. The RF transceiver 1401 is coupled to an antenna array 1402 and the processor 1404. The RF transceiver 1401 receives modulation symbol data from the processor 1404, generates a transmission RF signal, and supplies the transmission RF signal to the antenna array 1402. The RF transceiver 1401 generates a baseband reception signal based on a reception RF signal received by the antenna array 1402 and supplies the baseband reception signal to the processor 1404. The RF transceiver 1401 may include an analog beamformer circuit for beamforming. The analog beamformer circuit includes, for example, a plurality of phase shifters and a plurality of power amplifiers.

The network interface 1403 is used to communicate with network nodes (e.g., S-SN 2, T-SN 4, and control and transfer nodes in the core network). The network interface 1403 may include, for example, a Network Interface Card (NIC) that complies with the IEEE 802.3 series.

The processor 1404 performs digital baseband signal processing (data-plane processing) and control-plane processing for radio communication. The processor 1404 may include a plurality of processors. For example, the processor 1404 may include a modem processor (e.g., Digital Signal Processor (DSP)) for performing the digital baseband signal processing and a protocol stack processor (e.g., Central Processing Unit (CPU) or Micro Processing Unit (MPU)) for performing the control-plane processing. The processor 1404 may include a digital beamformer module for beamforming. The digital beamformer module may include a Multiple Input Multiple Output (MIMO) encoder and precoder.

The memory 1405 is composed of a combination of a volatile memory and a non-volatile memory. The volatile memory is, for example, a Static Random Access Memory (SRAM), a Dynamic RAM (DRAM), or a combination thereof. The non-volatile memory may be a Mask Read Only Memory (MROM), an Electrically Erasable Programmable ROM (EEPROM), a flash memory, or a hard disk drive, or any combination thereof. The memory 1405 may include a storage located away from the processor 1404. In this case, the processor 1404 may access the memory 1405 via the network interface 1403 or an I/O interface not shown.

The memory 1405 may store one or more software modules (computer programs) 1406 including instructions and data for performing processing by the MN 1 described in the above example embodiments. In some implementations, the processor 1404 may be configured to load and execute the software module(s) 1406 from the memory 1405, thereby performing the processing of the MN 1 described in the above example embodiments.

When the MN 1 is a CU (e.g., eNB-CU or gNB-CU) or a CU-CP, the MN 1 does not need to include the RF transceiver 1401 (and the antenna array 1402).

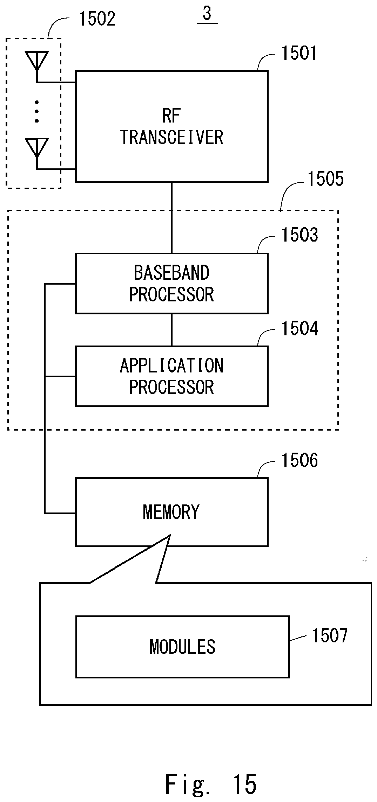

Fig. 15 is a block diagram showing a configuration example of the UE 3. The radio frequency (RF) transceiver 1501 performs analog RF signal processing to communicate with the MN 1, the S-SN 2 and the T-SN 4. The RF transceiver 1501 may include a plurality of transceivers. The analog RF signal processing performed by the RF transceiver 1501 includes frequency up-conversion, frequency downconversion, and amplification. The RF transceiver 1501 is coupled to the antenna array 1502 and the baseband processor 1503. The RF transceiver 1501 receives modulation symbol data (or OFDM symbol data) from the baseband processor 1503, generates a transmission RF signal, and supplies the transmission RF signal to the antenna array 1502. The RF transceiver 1501 generates a baseband reception signal based on the reception RF signal received by the antenna array 1502 and supplies the baseband reception signal to the baseband processor 1503. The RF transceiver 1501 may include an analog beamformer circuit for beamforming. The analog beamformer circuit includes, for example, a plurality of phase shifters and a plurality of power amplifiers.

The baseband processor 1503 performs digital baseband signal processing (data-plane processing) and control-plane processing for wireless communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) Inverse Fast Fourier Transform (IFFT) generation of OFDM symbol data (baseband OFDM signal). On the other hand, the control-plane processing includes communication management of layer 1 (e.g., transmission power control), layer 2 (e.g., radio resource management, and hybrid automatic repeat request (HARQ) processing), and layer 3 (e.g., signaling regarding attachment, mobility, and call management).

For example, the digital baseband signal processing performed by the baseband processor 1503 may include signal processing in the Service Data Adaptation Protocol (SDAP) layer, Packet Data Convergence Protocol (PDCP) layer, Radio Link Control (RLC) layer, MAC layer, and PHY layer. The control-plane processing performed by the baseband processor 1503 may also include processing of Non-Access Stratum (NAS) protocols, RRC protocols, and MAC Control Elements (CEs).

The baseband processor 1503 may perform MIMO encoding and precoding for beamforming.

The baseband processor 1503 may include a modem processor (e.g., DSP) that performs the digital baseband signal processing and a protocol stack processor (e.g., CPU or MPU) that performs the control-plane processing. In this case, the protocol stack processor performing the control-plane processing may be integrated with an application processor 1504 described later.

The application processor 1504 may also be referred to as a CPU, an MPU, a microprocessor, or a processor core. The application processor 1504 may include a plurality of processors (processor cores). The application processor 1504 loads a system software program (Operating System (OS)) and various application programs (e.g., a voice call application, a web browser, a mailer, a camera operation application, a music player application) from a memory 1506 or from another memory (not shown) and executes these programs, thereby providing various functions of the UE 3.

In some implementations, as represented by the dashed line (1505) in Fig. 15, the baseband processor 1503 and the application processor 1504 may be integrated on a single chip. In other words, the baseband processor 1503 and the application processor 1504 may be implemented in a single System on Chip (SoC) device 1505. A SoC device may be referred to as a system Large Scale Integration (LSI) or a chipset.

The memory 1506 is a volatile memory or a non-volatile memory, or a combination thereof. The memory 1506 may include a plurality of physically independent memory devices. The volatile memory is, for example, SRAM, DRAM, or a combination thereof. The non-volatile memory may be MROM, an EEPROM, a flash memory, a hard disk drive, or any combination thereof. The memory 1506 may include, for example, an external memory device that can be accessed by the baseband processor 1503, the application processor 1504, or the SoC 1505. The memory 1506 may include an internal memory device that is integrated into the baseband processor 1503, the application processor 1504, or the SoC 1505. Further, the memory 1506 may include a memory in a Universal Integrated Circuit Card (UICC).

The memory 1506 may store one or more software modules (computer programs) 1507 including instructions and data for processing by the UE 3 described in the above example embodiments. In some implementations, the baseband processor 1503 or the application processor 1504 may load the software module(s) 1507 from the memory 1506 and execute the loaded software module(s) 1507, thereby performing the processing of the UE 3 described in the above example embodiments with reference to the drawings.

The control-plane processing and operations performed by the UE 3 described in the above embodiments can be achieved by elements other than the RF transceiver 1501 and the antenna array 1502, i.e., achieved by the memory 1506, which stores the software modules 1507, and one or both of the baseband processor 1503 and the application processor 1504.

As described using Figs. 14 and 15, each of the processors in the MN 1, S-SN 2, T-SN 4, and UE 3 according to the example embodiments described above can execute one or more programs, containing a set of instructions, to cause a computer to perform an algorithm described with reference to the drawings. Each of these programs contains a set of instructions (or software codes) that, when loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered mark) disc or other optical disk storage, magnetic cassettes, magnetic tape, magnetic disk storage or other magnetic storage devices. Each program may be transmitted on a transitory computer readable medium or a communication medium. By way of example, and not limitation, transitory computer readable media or communication media can include electrical, optical, acoustical, or other form of propagated signals.

### Other Example Embodiments

In the above example embodiments, there is an MN initiated inter-SN CPC initiated by the MN 1 and an SN initiated inter-SN CPC initiated by the S-SN 2. As described in some of the above example embodiments, these two procedures may not be initiated (or configured) simultaneously for a single UE 3. However, it is possible that these procedures may be inadvertently initiated (or configured) simultaneously. In this case, the UE 3 may consider the inter-SN CPC that is initiated (or configured) first to be valid (or high priority) and the inter-SN CPC that is initiated (or configured) later to be invalid (or low priority). The UE 3 may determine (or recognize) from the CPC execution conditions whether the indicated conditional reconfiguration is for an MN initiated CPC or an SN initiated CPC. For example, in the case of an MN initiated CPC, the execution conditions may be provided to the UE 3 as measurement configurations of the MCG (e.g., measurement configuration) or in a similar configuration. On the other hand, in the case of a SN initiated CPC, the execution conditions may be provided to the UE 3 as measurement configurations of the SCG (e.g., measurement configuration) or in a similar configuration. Based on these differences, the UE 3 may determine (or recognize) whether the CPC is MN initiated or SN initiated. Additionally or alternatively, the MN 1 or the S-SN 2 may send information to the UE 3 explicitly indicating whether the CPC is MN initiated or SN initiated.

In the above example embodiments, if the execution conditions for a CPC candidate cell are met or satisfied, the UE 3 may at this point perform a check (e.g., compliance check) of the SCG configuration of the candidate cell (i.e., target PSCell) included in the CPC configuration (e.g., ConditionalReconfiguration IE). If there is no problem in checking the SCG configuration, the UE 3 initiates random access to the candidate cell (or to the T-SN 4 managing the candidate cell). On the other hand, if there is a problem in checking the SCG configuration, the UE 3 may send SCG Failure Information for the candidate cell to the MN 1 in an SRB of the MCG. Instead, the UE 3 may initiate random access to one of the other candidate cells (e.g., the cell with the best reception quality) and attempt to connect to the target cell via the CPC. In this case, the UE 3 may select the target cell for random access from among other candidate cells for which the execution condition is satisfied or from among other candidate cells for which the execution condition is not satisfied. In addition, the UE 3 may distinguish between an MN initiated inter-SN CPC from the MN 1 or an SN initiated inter-SN CPC from the S-SN 2 in order to select the target cell for random access. For example, if the candidate cell for which the execution condition is satisfied has been configured for an SN initiated CPC, the UE 3 may select other candidate cells only from among the candidate cells configured for that SN initiated CPC. On the other hand, If the candidate cell for which the execution condition is satisfied has been configured for an MN initiated CPC, the UE 3 may select other candidate cells only from among the candidate cells configured for that MN initiated CPC. In the case where the UE 3 initiated random access to a candidate cell for which the execution condition was satisfied but failed (Random access failure), the UE 3 may perform a similar operation.

In one or more of the above example embodiments, the MN 1 can send a CPC configuration (e.g., ConditionalReconfiguration IE) containing CPC execution conditions and SCG configurations to the UE 3 in an MN RRC (Connection) Reconfiguration message. Upon successful reception (and compliance check) of this RRC (Connection) Reconfiguration message, the UE 3 sends an RRC response message (e.g., MN RRC (Connection) Reconfiguration Complete message) to the MN 1. Triggered by this, the MN 1 sends an SN Release Request message to the S-SN 2. By indicating that the SN Release Request message is for an inter-SN CPC, the MN 1 allows the S-SN 2 to recognize it. Then, when the CPC execution condition is satisfied in any of the candidate cells, the UE 3 sends an additional MN RRC message (e.g., MN RRC (Connection) Reconfiguration Complete message) to the MN 1. This MN RRC message contains an SN RRC Reconfiguration Complete message to the T-SN 3. Upon receipt of this MN RRC message, the MN 1 sends a Conditional PSCell Change Notification message to the S-SN 2. On the other hand, if the CPC execution fails after the first MN RRC message has been sent to the MN 1, the UE 3 is expected to send SCG Failure Information to the MN 1. In this case, the MN 1 may release the S-SN 2 to terminate the DC or request SN Addition for another SN. However, since the MN 1 has already sent the SN Release Request message to the S-SN 2, it cannot resend an SN Release Request message to the same S-SN 2 indicating the (complete) release of the SN as usual. Therefore, the MN 1 can send a new X2/Xn message to the S-SN 2 to inform it of the termination of the DC or the release of the S-SN 2. The new X2/Xn message may be, for example, an SN Release Notification. Alternatively, the MN 1 can include a new Cause (e.g., CPC is failed, recovery from CPC failure) in an SN Release Request message and resend it. This allows the S-SN 2 to recognize that the UE 3 has failed the CPC and that the MN 1 is performing the recovery procedure.

In one or more of the above example embodiments, in response to receiving an SN Addition Request message from the MN 1 indicating a request for a CPC, the T-SN 4 decides whether to accept the CPC for one or more candidate PSCells. The T-SN 4 sends information indicating the accepted candidate PSCells to the MN 1 in an SN Addition Request Acknowledge message. The information indicating the accepted candidate PSCells may be indicated by an X2/Xn level IE or by an RRC container (e.g., CG-Config, or RRC level IE) included in this message. In addition, they may be presented in list form. The MN 1 may forward or transmit the information indicating the accepted candidate PSCells received from the T-SN 4 using a message (e.g., SN Release Request message) addressed to the S-SN 2 indicating notification that the MN-initiated inter-SN CPC has been configured, prepared, or triggered. This enables the S-SN 2 to recognize that the MN-initiated inter-SN CPC has been configured, prepared, or triggered for these accepted candidate PSCells.

Further, the above-described example embodiments are merely examples of applications of the technical ideas obtained by the inventors. These technical ideas are not limited to the above-described example embodiments and various modifications can be made thereto.

For example, the whole or part of the example embodiments disclosed above can be described as, but not limited to, the following supplementary notes.

### (Supplementary Note 1)

A Radio Access Network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to:
   while an MN-initiated inter-SN Conditional Primary Secondary Cell Group (SCG) Cell (PSCell) Change (CPC) from a source Secondary Node (SN) to a target SN is in progress with respect to a PSCell of an SCG of the UE, not configure, prepare, or allow an SN-initiated inter-SN CPC to at least the target SN with respect to the UE.

### (Supplementary Note 2)

The RAN node according to Supplementary Note 1, wherein the at least one processor is configured to notify the source SN that the MN-initiated inter-SN CPC is in progress.

### (Supplementary Note 3)

The RAN node according to Supplementary Note 1 or 2, wherein the at least one processor is configured to, during a procedure for preparing the MN-initiated inter-SN CPC, send to the source SN an inter-node message containing information indicating that this message is for a CPC.

### (Supplementary Note 4)

The RAN node according to Supplementary Note 3, wherein the inter-node message is an SN Release Request message.

### (Supplementary Note 5)

The RAN node according to Supplementary Note 1 or 2, wherein the at least one processor is configured to, if an inter-node message indicating a request for an SN-initiated inter-SN CPC from the source SN to the target SN is received while the MN-initiated inter-SN CPC is in progress, send a response message to the source SN indicating that the request is rejected because the MN-initiated inter-SN CPC is in progress.

### (Supplementary Note 6)

The RAN node according to any one of Supplementary Notes 1 to 5, wherein the at least one processor is configured to not configure or prepare an MN-initiated inter-SN CPC to at least the target SN with respect to the UE while an SN-initiated inter-SN CPC to the target SN is in progress with respect to the PSCell of the UE.

### (Supplementary Note 7)

A method performed by a Radio Access Network (RAN) node configured to operate as a Master Node (MN) associated with a Master Cell Group (MCG) in dual connectivity for a User Equipment (UE), the method comprising:
while an MN-initiated inter-SN Conditional Primary Secondary Cell Group (SCG) Cell (PSCell) Change (CPC) from a source Secondary Node (SN) to a target SN is in progress with respect to a PSCell of an SCG of the UE, not configuring, preparing, or allowing an SN-initiated inter-SN CPC to at least the target SN with respect to the UE.

### (Supplementary Note 8)

A program for causing a computer to perform a method for a Radio Access Network (RAN) node configured to operate as a Master Node (MN) associated with a Master Cell Group (MCG) in dual connectivity for a User Equipment (UE), the method comprising:
while an MN-initiated inter-SN Conditional Primary SCG Cell (PSCell) Change (CPC) from a source Secondary Node (SN) to a target SN is in progress with respect to a PSCell of a Secondary Cell Group (SCG) of the UE, not configuring, preparing, or allowing an SN-initiated inter-SN CPC to at least the target SN with respect to the UE.

### (Supplementary Note 9)

A Radio Access Network (RAN) node configured to operate as a source Secondary Node (SN) associated with a Secondary Cell Group (SCG) in dual connectivity for a User Equipment (UE), the RAN node comprising:
at least one memory; and
at least one processor coupled to the at least one memory and configured to:
   while an MN-initiated inter-SN Conditional Primary SCG Cell (PSCell) Change (CPC) from the source SN to a target SN is in progress with respect to a PSCell of the SCG of the UE, not initiate an SN-initiated inter-SN CPC to at least the target SN with respect to the UE.

### (Supplementary Note 10)

The RAN node according to Supplementary Note 9, wherein the at least one processor is configured to not initiate an SN-initiated inter-SN CPC to the target SN with respect to the UE if a notification is received from a Master Node (MN) indicating that the MN-initiated inter-SN CPC is in progress.

### (Supplementary Note 11)

The RAN node according to Supplementary Note 9, wherein the at least one processor is configured to not initiate an SN-initiated inter-SN CPC to the target SN with respect to the UE if an inter-node message containing information indicating that this message is for a CPC is received from a Master Node (MN) during a procedure for preparing the MN-initiated inter-SN CPC.

### (Supplementary Note 12)

The RAN node according to Supplementary Note 11, wherein the inter-node message is an SN Release Request message.

### (Supplementary Note 13)

The RAN node according to Supplementary Note 9, wherein the at least one processor is configured to not initiate an SN-initiated inter-SN CPC to the target SN with respect to the UE if a response message is received from a Master Node (MN) indicating that a request for an SN-initiated inter-SN CPC is rejected because the MN-initiated inter-SN CPC is in progress.

### (Supplementary Note 14)

A method performed by a Radio Access Network (RAN) node configured to operate as a source Secondary Node (SN) associated with a Secondary Cell Group (SCG) in dual connectivity for a User Equipment (UE), the method comprising:
while an MN-initiated inter-SN Conditional Primary SCG Cell (PSCell) Change (CPC) from the source SN to a target SN is in progress with respect to a PSCell of the SCG of the UE, not initiating an SN-initiated inter-SN CPC to at least the target SN with respect to the UE.

### (Supplementary Note 15)

A program for causing a computer to perform a method for a Radio Access Network (RAN) node configured to operate as a source Secondary Node (SN) associated with a Secondary Cell Group (SCG) in dual connectivity for a User Equipment (UE), the method comprising:
while an MN-initiated inter-SN Conditional Primary SCG Cell (PSCell) Change (CPC) from the source SN to a target SN is in progress with respect to a PSCell of the SCG of the UE, not initiating an SN-initiated inter-SN CPC to at least the target SN with respect to the UE.

### (Supplementary Note 16)

A Radio Access Network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to:
   during a procedure for preparing an MN-initiated inter-SN Conditional Primary Secondary Cell Group (SCG) Cell (PSCell) Change (CPC) from a source Secondary Node (SN) to a target SN with respect to a PSCell of an SCG of the UE, send an SN Release Request message to the source SN containing information indicating that this message is for an inter-SN CPC.

### (Supplementary Note 17)

The RAN node according to Supplementary Note 16, wherein the SN Release Request message causes the source SN to continue providing user data to the UE until execution of the CPC.

### (Supplementary Note 18)

The RAN node according to Supplementary Note 16 or 17, wherein the at least one processor is configured to send an inter-node message to the source SN after sending the SN Release Request message, in response to execution of the CPC or satisfaction of an execution condition of the CPC.

### (Supplementary Note 19)

The RAN node according to Supplementary Note 18, wherein the inter-node message causes the source SN to stop providing user data to the UE.

### (Supplementary Note 20)

A method performed by a Radio Access Network (RAN) node configured to operate as a Master Node (MN) associated with a Master Cell Group (MCG) in dual connectivity for a User Equipment (UE), the method comprising:
during a procedure for preparing an MN-initiated inter-SN Conditional Primary Secondary Cell Group (SCG) Cell (PSCell) Change (CPC) from a source Secondary Node (SN) to a target SN with respect to a PSCell of an SCG of the UE, sending an SN Release Request message to the source SN containing information indicating that this message is for an inter-SN CPC.

### (Supplementary Note 21)

A program for causing a computer to perform a method for a Radio Access Network (RAN) node configured to operate as a Master Node (MN) associated with a Master Cell Group (MCG) in dual connectivity for a User Equipment (UE), the method comprising:
during a procedure for preparing an MN-initiated inter-SN Conditional Primary Secondary Cell Group (SCG) Cell (PSCell) Change (CPC) from a source Secondary Node (SN) to a target SN with respect to a PSCell of an SCG of the UE, sending an SN Release Request message to the source SN containing information indicating that this message is for an inter-SN CPC.

### (Supplementary Note 22)

A Radio Access Network (RAN) node configured to operate as a source Secondary Node (SN) associated with a Secondary Cell Group (SCG) in dual connectivity for a User Equipment (UE), the RAN node comprising:
at least one memory; and
at least one processor coupled to the at least one memory and configured to:
   during a procedure for preparing an MN-initiated inter-SN Conditional Primary SCG Cell (PSCell) Change (CPC) from the source SN to a target SN with respect to a PSCell of the SCG of the UE, receive an SN Release Request message from a Master Node (MN) containing information indicating that this message is for an inter-SN CPC.

### (Supplementary Note 23)

The RAN node according to Supplementary Note 22, wherein the at least one processor is configured to, upon receipt of the SN Release Request message, continue providing user data to the UE until execution of the CPC.

### (Supplementary Note 24)

The RAN node according to Supplementary Note 22 or 23, wherein the at least one processor is configured to stop providing user data to the UE after receiving the SN Release Request message, in response to receiving an inter-node message from the MN indicating execution of the CPC or satisfaction of an execution condition of the CPC.

### (Supplementary Note 25)

A method performed by a Radio Access Network (RAN) node configured to operate as a source Secondary Node (SN) associated with a Secondary Cell Group (SCG) in dual connectivity for a User Equipment (UE), the method comprising:
during a procedure for preparing an MN-initiated inter-SN Conditional Primary SCG Cell (PSCell) Change (CPC) from the source SN to a target SN with respect to a PSCell of the SCG of the UE, receiving an SN Release Request message from a Master Node (MN) containing information indicating that this message is for an inter-SN CPC.

### (Supplementary Note 26)

A program for causing a computer to perform a method for a Radio Access Network (RAN) node configured to operate as a source Secondary Node (SN) associated with a Secondary Cell Group (SCG) in dual connectivity for a User Equipment (UE), the method comprising:
during a procedure for preparing an MN-initiated inter-SN Conditional Primary SCG Cell (PSCell) Change (CPC) from the source SN to a target SN with respect to a PSCell of the SCG of the UE, receiving an SN Release Request message from a Master Node (MN) containing information indicating that this message is for an inter-SN CPC.

### (Supplementary Note 27)

A Radio Access Network (RAN) node configured to operate as a target Secondary Node (SN) associated with a Secondary Cell Group (SCG) in dual connectivity for a User Equipment (UE), the RAN node comprising:
at least one memory; and
at least one processor coupled to the at least one memory and configured to:
   send a rejection message to a Master Node (MN) when rejecting a request for an inter-SN Conditional Primary SCG Cell (PSCell) Change (CPC) from a source SN to the target SN,
wherein the rejection message indicates whether any inter-SN CPCs are unacceptable by the target SN or only the inter-SN CPC for one or more candidate cells specified in the request is unacceptable.

### (Supplementary Note 28)

The RAN node according to Supplementary Note 27, wherein the rejection message indicates one of a plurality of causes,
wherein the plurality of causes comprises:
a first cause indicating that the target SN is unable to accept any inter-SN CPC; and
a second cause indicating that the target SN is capable of accepting an inter-SN CPC but is unable to accept an inter-SN CPC with respect to all of the one or more candidate cells specified in the request.

### (Supplementary Note 29)

A method performed by a Radio Access Network (RAN) node configured to operate as a target Secondary Node (SN) associated with a Secondary Cell Group (SCG) in dual connectivity for a User Equipment (UE), the method comprising:
sending a rejection message to a Master Node (MN) when rejecting a request for an inter-SN Conditional Primary SCG Cell (PSCell) Change (CPC) from a source SN to the target SN,
wherein the rejection message indicates whether any inter-SN CPCs are unacceptable by the target SN or only the inter-SN CPC for one or more candidate cells specified in the request is unacceptable.

### (Supplementary Note 30)

A program for causing a computer to perform a method for a Radio Access Network (RAN) node configured to operate as a target Secondary Node (SN) associated with a Secondary Cell Group (SCG) in dual connectivity for a User Equipment (UE), the method comprising:
sending a rejection message to a Master Node (MN) when rejecting a request for an inter-SN Conditional Primary SCG Cell (PSCell) Change (CPC) from a source SN to the target SN,
wherein the rejection message indicates whether any inter-SN CPCs are unacceptable by the target SN or only the inter-SN CPC for one or more candidate cells specified in the request is unacceptable.

This application is based upon and claims the benefit of priority from Japanese Patent Application No. 2021-116604, filed on July 14, 2021, the disclosure of which is incorporated herein in its entirety by reference.

### Reference Signs List

- 1: Master Node (MN)
- 2: Source Secondary Node (S-SN)
- 3: User Equipment (UE)
- 4: Target Secondary Node (T-SN)
- 1404: Processor
- 1405: Memory
- 1406: Modules
- 1503: Baseband Processor
- 1504: Application Processor
- 1506: Memory
- 1507: Modules

## Claims

1. A Radio Access Network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to:
while an MN-initiated inter-SN Conditional Primary Secondary Cell Group (SCG) Cell (PSCell) Change (CPC) from a source Secondary Node (SN) to a target SN is in progress with respect to a PSCell of an SCG of the UE, not configure, prepare, or allow an SN-initiated inter-SN CPC to at least the target SN with respect to the UE.

2. The RAN node according to claim 1, wherein the at least one processor is configured to notify the source SN that the MN-initiated inter-SN CPC is in progress.

3. The RAN node according to claim 1 or 2, wherein the at least one processor is configured to, during a procedure for preparing the MN-initiated inter-SN CPC, send to the source SN an inter-node message containing information indicating that this message is for a CPC.

4. The RAN node according to claim 3, wherein the inter-node message is an SN Release Request message.

5. The RAN node according to claim 1 or 2, wherein the at least one processor is configured to, if an inter-node message indicating a request for an SN-initiated inter-SN CPC from the source SN to the target SN is received while the MN-initiated inter-SN CPC is in progress, send a response message to the source SN indicating that the request is rejected because the MN-initiated inter-SN CPC is in progress.

6. The RAN node according to any one of claims 1 to 5, wherein the at least one processor is configured to not configure or prepare an MN-initiated inter-SN CPC to at least the target SN with respect to the UE while an SN-initiated inter-SN CPC to the target SN is in progress with respect to the PSCell of the UE.

7. A method performed by a Radio Access Network (RAN) node configured to operate as a Master Node (MN) associated with a Master Cell Group (MCG) in dual connectivity for a User Equipment (UE), the method comprising:
while an MN-initiated inter-SN Conditional Primary Secondary Cell Group (SCG) Cell (PSCell) Change (CPC) from a source Secondary Node (SN) to a target SN is in progress with respect to a PSCell of an SCG of the UE, not configuring, preparing, or allowing an SN-initiated inter-SN CPC to at least the target SN with respect to the UE.

8. A non-transitory computer readable medium storing a program for causing a computer to perform a method for a Radio Access Network (RAN) node configured to operate as a Master Node (MN) associated with a Master Cell Group (MCG) in dual connectivity for a User Equipment (UE), the method comprising:
while an MN-initiated inter-SN Conditional Primary SCG Cell (PSCell) Change (CPC) from a source Secondary Node (SN) to a target SN is in progress with respect to a PSCell of a Secondary Cell Group (SCG) of the UE, not configuring, preparing, or allowing an SN-initiated inter-SN CPC to at least the target SN with respect to the UE.

9. A Radio Access Network (RAN) node configured to operate as a source Secondary Node (SN) associated with a Secondary Cell Group (SCG) in dual connectivity for a User Equipment (UE), the RAN node comprising:
at least one memory; and
at least one processor coupled to the at least one memory and configured to:
while an MN-initiated inter-SN Conditional Primary SCG Cell (PSCell) Change (CPC) from the source SN to a target SN is in progress with respect to a PSCell of the SCG of the UE, not initiate an SN-initiated inter-SN CPC to at least the target SN with respect to the UE.

10. The RAN node according to claim 9, wherein the at least one processor is configured to not initiate an SN-initiated inter-SN CPC to the target SN with respect to the UE if a notification is received from a Master Node (MN) indicating that the MN-initiated inter-SN CPC is in progress.

11. The RAN node according to claim 9, wherein the at least one processor is configured to not initiate an SN-initiated inter-SN CPC to the target SN with respect to the UE if an inter-node message containing information indicating that this message is for a CPC is received from a Master Node (MN) during a procedure for preparing the MN-initiated inter-SN CPC.

12. The RAN node according to claim 11, wherein the inter-node message is an SN Release Request message.

13. The RAN node according to claim 9, wherein the at least one processor is configured to not initiate an SN-initiated inter-SN CPC to the target SN with respect to the UE if a response message is received from a Master Node (MN) indicating that a request for an SN-initiated inter-SN CPC is rejected because the MN-initiated inter-SN CPC is in progress.

14. A method performed by a Radio Access Network (RAN) node configured to operate as a source Secondary Node (SN) associated with a Secondary Cell Group (SCG) in dual connectivity for a User Equipment (UE), the method comprising:
while an MN-initiated inter-SN Conditional Primary SCG Cell (PSCell) Change (CPC) from the source SN to a target SN is in progress with respect to a PSCell of the SCG of the UE, not initiating an SN-initiated inter-SN CPC to at least the target SN with respect to the UE.

15. A non-transitory computer readable medium storing a program for causing a computer to perform a method for a Radio Access Network (RAN) node configured to operate as a source Secondary Node (SN) associated with a Secondary Cell Group (SCG) in dual connectivity for a User Equipment (UE), the method comprising:
while an MN-initiated inter-SN Conditional Primary SCG Cell (PSCell) Change (CPC) from the source SN to a target SN is in progress with respect to a PSCell of the SCG of the UE, not initiating an SN-initiated inter-SN CPC to at least the target SN with respect to the UE.

16. A Radio Access Network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to:
during a procedure for preparing an MN-initiated inter-SN Conditional Primary Secondary Cell Group (SCG) Cell (PSCell) Change (CPC) from a source Secondary Node (SN) to a target SN with respect to a PSCell of an SCG of the UE, send an SN Release Request message to the source SN containing information indicating that this message is for an inter-SN CPC.

17. The RAN node according to claim 16, wherein the SN Release Request message causes the source SN to continue providing user data to the UE until execution of the CPC.

18. The RAN node according to claim 16 or 17, wherein the at least one processor is configured to send an inter-node message to the source SN after sending the SN Release Request message, in response to execution of the CPC or satisfaction of an execution condition of the CPC.

19. The RAN node according to claim 18, wherein the inter-node message causes the source SN to stop providing user data to the UE.

20. A method performed by a Radio Access Network (RAN) node configured to operate as a Master Node (MN) associated with a Master Cell Group (MCG) in dual connectivity for a User Equipment (UE), the method comprising:
during a procedure for preparing an MN-initiated inter-SN Conditional Primary Secondary Cell Group (SCG) Cell (PSCell) Change (CPC) from a source Secondary Node (SN) to a target SN with respect to a PSCell of an SCG of the UE, sending an SN Release Request message to the source SN containing information indicating that this message is for an inter-SN CPC.

21. A non-transitory computer readable medium storing a program for causing a computer to perform a method for a Radio Access Network (RAN) node configured to operate as a Master Node (MN) associated with a Master Cell Group (MCG) in dual connectivity for a User Equipment (UE), the method comprising:
during a procedure for preparing an MN-initiated inter-SN Conditional Primary Secondary Cell Group (SCG) Cell (PSCell) Change (CPC) from a source Secondary Node (SN) to a target SN with respect to a PSCell of an SCG of the UE, sending an SN Release Request message to the source SN containing information indicating that this message is for an inter-SN CPC.

22. A Radio Access Network (RAN) node configured to operate as a source Secondary Node (SN) associated with a Secondary Cell Group (SCG) in dual connectivity for a User Equipment (UE), the RAN node comprising:
at least one memory; and
at least one processor coupled to the at least one memory and configured to:
during a procedure for preparing an MN-initiated inter-SN Conditional Primary SCG Cell (PSCell) Change (CPC) from the source SN to a target SN with respect to a PSCell of the SCG of the UE, receive an SN Release Request message from a Master Node (MN) containing information indicating that this message is for an inter-SN CPC.

23. The RAN node according to claim 22, wherein the at least one processor is configured to, upon receipt of the SN Release Request message, continue providing user data to the UE until execution of the CPC.

24. The RAN node according to claim 22 or 23, wherein the at least one processor is configured to stop providing user data to the UE after receiving the SN Release Request message, in response to receiving an inter-node message from the MN indicating execution of the CPC or satisfaction of an execution condition of the CPC.

25. A method performed by a Radio Access Network (RAN) node configured to operate as a source Secondary Node (SN) associated with a Secondary Cell Group (SCG) in dual connectivity for a User Equipment (UE), the method comprising:
during a procedure for preparing an MN-initiated inter-SN Conditional Primary SCG Cell (PSCell) Change (CPC) from the source SN to a target SN with respect to a PSCell of the SCG of the UE, receiving an SN Release Request message from a Master Node (MN) containing information indicating that this message is for an inter-SN CPC.

26. A non-transitory computer readable medium storing a program for causing a computer to perform a method for a Radio Access Network (RAN) node configured to operate as a source Secondary Node (SN) associated with a Secondary Cell Group (SCG) in dual connectivity for a User Equipment (UE), the method comprising:
during a procedure for preparing an MN-initiated inter-SN Conditional Primary SCG Cell (PSCell) Change (CPC) from the source SN to a target SN with respect to a PSCell of the SCG of the UE, receiving an SN Release Request message from a Master Node (MN) containing information indicating that this message is for an inter-SN CPC.

27. A Radio Access Network (RAN) node configured to operate as a target Secondary Node (SN) associated with a Secondary Cell Group (SCG) in dual connectivity for a User Equipment (UE), the RAN node comprising:
at least one memory; and
at least one processor coupled to the at least one memory and configured to:
send a rejection message to a Master Node (MN) when rejecting a request for an inter-SN Conditional Primary SCG Cell (PSCell) Change (CPC) from a source SN to the target SN,
wherein the rejection message indicates whether any inter-SN CPCs are unacceptable by the target SN or only the inter-SN CPC for one or more candidate cells specified in the request is unacceptable.

28. The RAN node according to claim 27, wherein the rejection message indicates one of a plurality of causes,
wherein the plurality of causes comprises:
a first cause indicating that the target SN is unable to accept any inter-SN CPC; and
a second cause indicating that the target SN is capable of accepting an inter-SN CPC but is unable to accept an inter-SN CPC with respect to all of the one or more candidate cells specified in the request.

29. A method performed by a Radio Access Network (RAN) node configured to operate as a target Secondary Node (SN) associated with a Secondary Cell Group (SCG) in dual connectivity for a User Equipment (UE), the method comprising:
sending a rejection message to a Master Node (MN) when rejecting a request for an inter-SN Conditional Primary SCG Cell (PSCell) Change (CPC) from a source SN to the target SN,
wherein the rejection message indicates whether any inter-SN CPCs are unacceptable by the target SN or only the inter-SN CPC for one or more candidate cells specified in the request is unacceptable.

30. A non-transitory computer readable medium storing a program for causing a computer to perform a method for a Radio Access Network (RAN) node configured to operate as a target Secondary Node (SN) associated with a Secondary Cell Group (SCG) in dual connectivity for a User Equipment (UE), the method comprising:
sending a rejection message to a Master Node (MN) when rejecting a request for an inter-SN Conditional Primary SCG Cell (PSCell) Change (CPC) from a source SN to the target SN,
wherein the rejection message indicates whether any inter-SN CPCs are unacceptable by the target SN or only the inter-SN CPC for one or more candidate cells specified in the request is unacceptable.
